# EUROPEAN PATENT SPECIFICATION

(11) **EP 1 867 267 B1**
(45) Date of publication and mention of the grant of the patent: **27.06.2012**
(21) Application number: 07010147.2
(22) Date of filing: 22.05.2007
(51) Int. Cl.: A47L 9/19, A47L 9/20, A47L 9/28, A47L 9/16, A47L 9/12

(54) **Vaccum cleaner having a filter capable of collecting dust**
Staubsauger mit Filter zur Staubsammlung
Aspirateur ayant un filtre capable de collecter la poussière

(30) Priority: 14.06.2006 JP 2006164946; 14.06.2006 JP 2006164947
(43) Date of publication of application: 19.12.2007
(73) Proprietor: Toshiba TEC Kabushiki Kaisha, Tokyo 141-8664 (JP)
(72) Inventor: Tsuchiya, Yoshihiro, Shinagawa-ku Tokyo 141-8664 (JP)
(74) Representative: Kramer - Barske - Schmidtchen

(56) References cited:
- EP-A- 1 714 602
- JP-A- 2005 218 561
- US-A- 3 621 640

## Description

The present invention relates to a vacuum cleaner that separates dust from the air drawn by a motor-driven blower, by using a dust-collecting unit that utilizes an inertial force and a filter that is located downstream of the dust-collecting unit.

Such a vacuum cleaner according to the preamble of claim 1 is already known from JP-2005 218561 and US-A-3621640.

Electric vacuum cleaners are known, each of which separates dust from the air drawn by a motor-driven blower, by using an inertial force, and therefore need not use a pack filter shaped like a bag. A vacuum cleaner of this type is disclosed in, for example, Japanese Patent No. 3490081.

The vacuum cleaner disclosed in this patent comprises a cleaner body that incorporates a motor-driven blower. The cleaner body supports a dust-collecting container. The dust-collecting container, which can be removed from the cleaner body, is positioned in front of the motor-driven blower. The dust-collecting container has a first dust-collecting chamber, a depressurized chamber, a separation section, and a guide duct. The depressurized chamber communicates with the suction port of the motor-driven blower. When the motor-driven blower operates, it generates a negative pressure in the depressurized chamber. The depressurized chamber communicates with the first dust-collecting chamber through a first net-like filter. The separation section is provided in the depressurized chamber. The separation section has a duct shaped like a hollow cylinder. The duct is connected at its upstream end to a hose through which dust is drawn together with air. A part of the duct communicates with the depressurized chamber via a second net-like filter. The guide duct connects the downstream end of the duct to the first dust-collecting chamber.

The air drawn from the hose into the duct of the separation section and containing dust is guided into the depressurized chamber through the second net-like filter. Dust particles of relatively large mass, drawn into the duct by virtue of an inertial force, pass through the duct and are guided into the first dust-collecting chamber through the guide duct. Part of the air drawn into the duct is guided through the guide duct into the first dust-collecting chamber. In the first dust-collecting chamber, a swirling airflow develops. This airflow compresses the dust particles guided into the first dust-collecting chamber. The air in the first dust-collecting chamber is guided through the first net-like filter into the depressurized chamber. In the depressurized chamber, the air meets the air that has passed through the second net-like filter. The dust is thereby separated from the air in the separation section.

The dust-collecting container has an opening at an end that is adjacent to the suction port of the motor-driven blower. A pleated filter is provided in the opening of the dust-collecting container. The pleated filter can catch fine dust particles that have passed through the separation section. The pleated filter is located downstream of the dust-collecting container with respect to the direction in which the air flows and is exposed, at the front, to the depressurized chamber.

The dust-collecting container has a second dust-collecting chamber. The second dust-collecting chamber is positioned below the pleated filter and is partitioned from the first dust-collecting chamber by the rear wall of the dust-collecting container. The rear wall of the dust-collecting container lies near the lower part of the front of the pleated filter. A gap is provided between the rear wall of the dust-collecting container and the front of the pleated filter. The upper edge of this gap opens to the depressurized chamber. The lower edge of the gap opens to the second dust-collecting chamber.

The dust caught by the pleated filter is forcedly removed from the pleated filter by a dust-removing mechanism. The dust-removing mechanism vibrates the pleated filter while the motor-driven blower remains not operating. The fine dust particles are thereby separated from the pleated filter. The dust thus separated from the pleated filter passes through the narrow gap between the rear wall of the dust-collecting container and the front of the pleated filter and falls into the second dust-collecting chamber. The gap makes it difficult for the negative pressure generated by the operating motor-driven blower to act in the second dust-collecting chamber. In other words, the dust collected in the second dust-collecting chamber is drawn into the depressurized chamber and is thereby prevented from sticking to the pleated filter again.

In any vacuum cleaner so configured as described above, the dust-removing mechanism removes fine dust particles from the pleated filter and the dust is collected in the second dust-collecting chamber. The dust-removing mechanism is not means for positively cleaning the inner surface of the depressurized chamber, at which the pleated filter is exposed, or the rear wall of the dust-collecting container, which is opposed to the gap.

Therefore, if the dust removed from the pleated filter by the dust-removing mechanism floats in the depressurized chamber or in the gap, it will inevitably stick to the inner surface of the depressurized chamber, at which the pleated filter is exposed, or the rear wall of the dust-collecting container, which is opposed to the gap. Further, the dust removed from the pleated filter and flowing in the depressurized chamber will unavoidably stick to the pleated filter again after the dust-removing mechanism stops removing dust from the pleated filter.

Hence, if the vacuum cleaner is operated again after the dust has been removed, the dust on, for example, the inner surface of the depressurized chamber will be drawn out of the depressurized chamber due to the negative pressure generated as the motor-driven blower operates and will eventually stick to the front surface of the pleated filter. As the dust sticks to the pleated filter, the pleated filter may be clogged in a short time.

In addition, the dust may be found sticking to the inner surface of the depressurized chamber or the rear wall of the dust-collecting container, when the pleated filter is detached from the dust-collecting container. In this case, not only the pleated filter, but also the interior of the depressurized chamber or the rear wall of the dust-collecting container must be cleaned. This increases the time and labor for the maintenance of the vacuum cleaner. Some improvement to the cleaner is therefore desired.

An object of the present invention is to provide a vacuum cleaner in which a filter for catching dust that has passed through a dust-catching unit and a receptacle that contains the filter can be cleaned by using the air that flows toward the motor-driven blower.

To achieve the object, a vacuum cleaner according to one aspect of this invention comprises: a motor-driven blower which draws air; a dust-catching unit which allows passage of air drawn by the motor-driven blower and which has a separation section configured to separate dust from the air and a dust-collecting section configured to collect the dust separated from the air in the separation section; a receptacle which is arranged between the motor-driven blower and the dust-catching unit; a filter which is provided in the receptacle and which filters the air that has passed through the dust-catching unit; and an airflow control device which is arranged between the filter and the motor-driven blower. The airflow control device generates a first airflow that goes toward the motor-driven blower through the dust-catching unit and the filter, and a second airflow that goes toward the motor-driven blower after flowing from the receptacle, and bypasses the filter and passing through at least a part of the dust-catching unit. That part of the dust-catching unit is located downstream of the receptacle, with respect to a direction in which the second airflow goes.

In the present invention, the filter that catches the dust that has passed through the dust-catching unit and the receptacle that holds the filter can be cleaned by utilizing the second airflow flowing toward the motor-driven blower. Hence, no dust sticks to the filter or the receptacle. The vacuum cleaner therefore remains clean. In addition, neither the filter nor the receptacle needs to be manually cleaned from time to time.

The invention can be more fully understood from the following detailed description when taken in conjunction with the accompanying drawings, in which:
FIG. 1 is a perspective view showing a vacuum cleaner according to a first embodiment of the present invention;
FIG. 2 is a perspective view of the first embodiment of the invention, showing the dust-catching unit detached from the cleaner body;
FIG. 3 is a sectional view of the vacuum cleaner according to the first embodiment of the present invention;
FIG. 4 is a perspective view of the first embodiment of the invention, illustrating the positional relation between the dust-catching unit, the airflow control device and the motor-driven blower;
FIG. 5 is another perspective view of the first embodiment of the invention, illustrating the positional relation between the dust-catching unit, the airflow control device and the motor-driven blower;
FIG. 6 is a perspective view of the dust-catching unit provided in the first embodiment of the invention, as viewed from the rear side;
FIG. 7 is a sectional view of the dust-catching unit provided in the first embodiment of the invention;
FIG. 8 is a perspective view of the dust-catching unit provided in the first embodiment of the invention, as viewed from the front side;
FIG. 9 is a perspective view of the dust-catching unit, with the cover removed from the case of the main unit;
FIG. 10 is a perspective view of the dust-catching unit, partly cut along line F10-F10 shown in FIG. 7;
FIG. 11 is a perspective view of the dust-catching unit, showing the separation section and the return path disconnected from each other in the first embodiment of the invention;
FIG. 12 is a perspective view of the first embodiment of the invention, showing the separation section and the return path connected from each other;
FIG. 13 is a perspective view of the first embodiment of the invention, showing the dust-collecting case of the dust-catching unit;
FIG. 14 is a perspective view of the first embodiment of the invention, showing the filter incorporated in the filter-cover section of the case;
FIG. 15 is a side view of a filter according to the first embodiment of the present invention;
FIG. 16 is a perspective view showing the positional relation between the air inlet port and second shutter of the dust-catching unit, in the first embodiment of the invention;
FIG. 17 is a perspective view of the dust-catching unit according to the first embodiment of the invention, showing the filter removed from the filter-cover section of the case;
FIG. 18 is a perspective view showing the positional relation between the dust-catching unit and airflow control device, in the first embodiment of the invention;
FIG. 19 is a perspective view showing the positional relation that the control member of the airflow control device has with the duct, in the first embodiment of the invention;
FIG. 20 is a perspective view showing the positional relation that the switching passage of the control member has with the second open end of the duct while the control member remains in the first position, in the first embodiment of the invention;
FIG. 21 is a perspective view showing the positional relation that the switching passage of the control member has with the second open end of the duct while the control member remains in the second position, in the first embodiment of the invention;
FIG. 22 is a block diagram showing the control system of the vacuum cleaner according to the first embodiment of the present invention;
FIG. 23 is a block diagram showing the control system of a vacuum cleaner according to a second embodiment of the present invention; and
FIG. 24 is a block diagram showing the control system of a vacuum cleaner according to a third embodiment of the present invention.

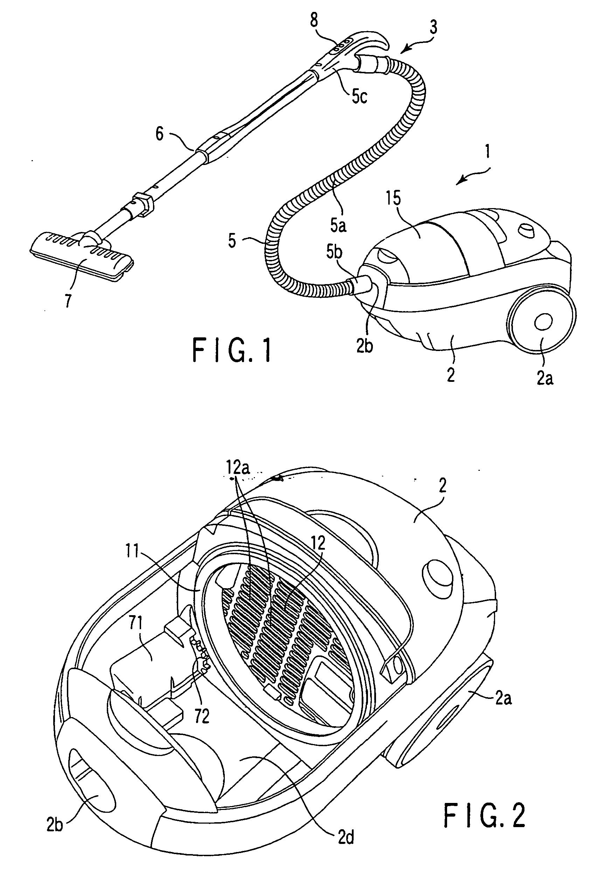

The first embodiment of the present invention will be described, with reference to FIGS. 1 to 22.

FIG. 1 shows a vacuum cleaner 1 of canister type, which can move on the floor to be cleaned. The vacuum cleaner 1 comprises a cleaner body 2 and a suction unit 3. The cleaner body 2 has a plurality of wheels 2a and a connection port 2b. The wheels 2a are rotatably supported on the cleaner body 2. The connection port 2b opens in the front of the cleaner body 2.

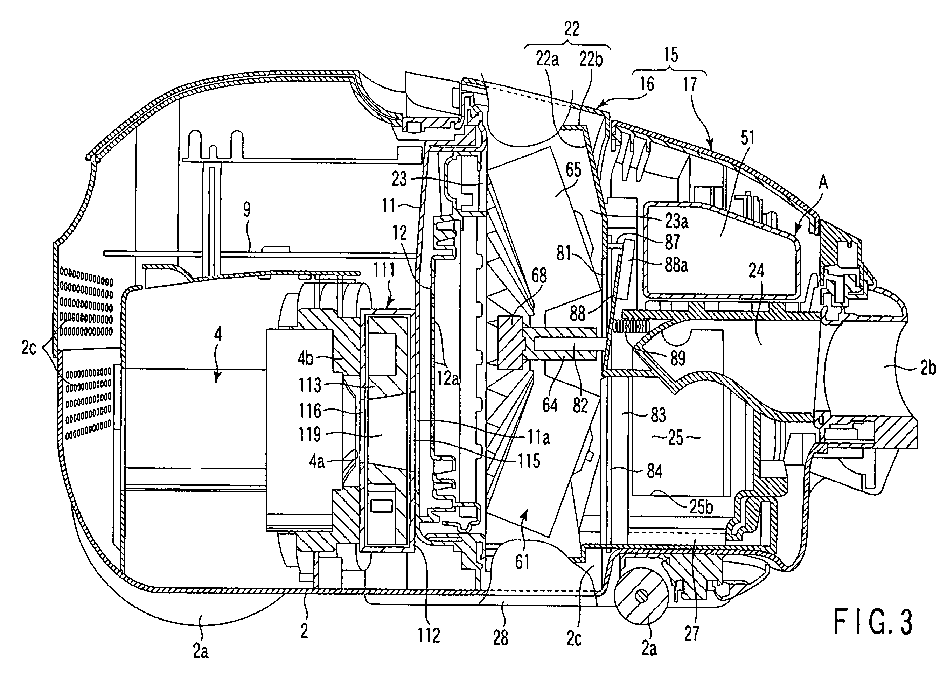

As FIG. 3 shows, the cleaner body 2 incorporates a motor-driven blower 4. The motor-driven blower 4 is provided in the rear half of the cleaner body 2 and has an air inlet port 4a and a support ring 4b. Through the air inlet port 4a, air can be drawn into the blower 4. The support ring 4b, which is made of rubber, surrounds the air inlet port 4a. The air inlet port 4a faces toward the front of the cleaner body 2. The support ring 4b is located at the front end of the motor-driven blower 4. The cleaner body 2 has a plurality of exhaust ports 2c. The exhaust ports 2c lie at the back of the motor-driven blower 4.

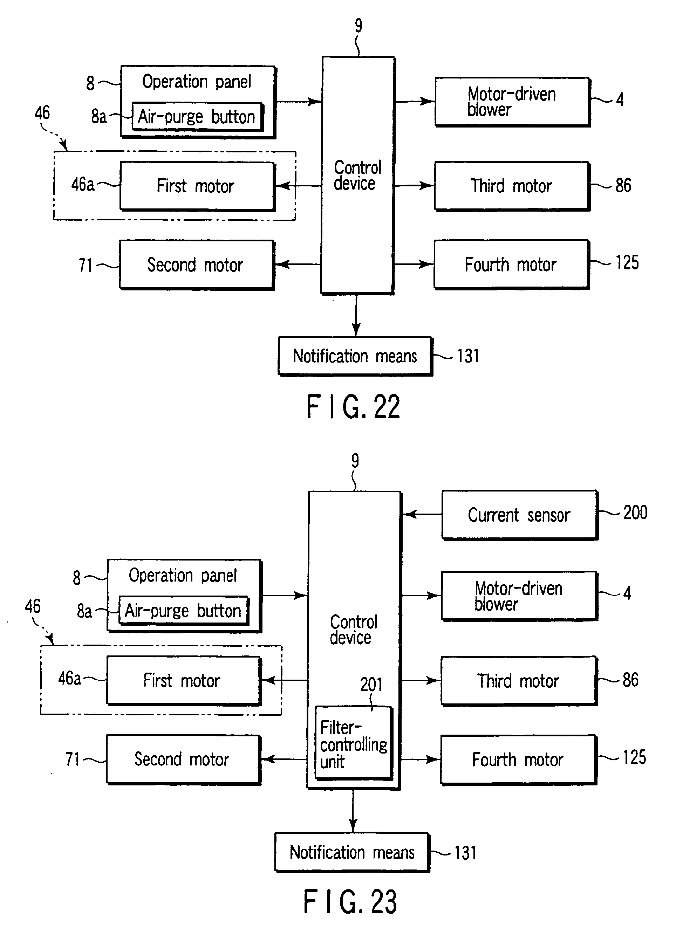

As shown in FIG. 1, the suction unit 3 comprises a suction hose 5, a plurality of extension pipes 6, and a suction head 7. The suction hose 5 has a flexible hose body 5a. The hose body 5a has a connection part 5b at one end and an operation section 5c at the other end. The connection part 5b, which is shaped like a hollow cylinder, is connected to the connection port 2b of the cleaner body 2. The operation section 5c has an operation panel 8. The operation panel 8 has a plurality of operation buttons including an air-purge button 8a that is shown in FIG. 22. When pushed, the operation buttons control the operation of the vacuum cleaner 1, with the assistance of a control device 9 (shown in FIG. 22) that is provided in the cleaner body 2. The proximal extension pipe 6 is connected to the operation section 5c and can be disconnected therefrom. The suction head 7 is connected to the distal end of the distal extension pipe 6 and can be disconnected therefrom.

As shown in FIG. 2, the cleaner body 2 has a holder section 2d. The holder section 2d lies between the connection port 2b and the motor-driven blower 4. The holder section 2d is a recess that opens upwards. A case holder 11 is secured to the rear end of the holder section 2d. As shown in FIG. 3, the case holder 11 stands upright from the cleaner body 2, portioning the motor-driven blower 4 and the holder section 2d. The case holder 11 has a through hole 11a that is positioned in front of the motor-driven blower 4. The case holder 11 further has a standing wall 12 that has a plurality of air holes 12a. The standing wall 12 covers the through hole 11a of the case holder 11 from the front of the cleaner body 2, and is exposed to the holder section 2d.

As shown in FIG. 3, a dust-catching unit 15 is removably provided in the holder section 2d of the cleaner body 2. The dust-catching unit 15 comprises a main body 16 and a dust-collecting case 17. The main body 16 has a case 21. As shown in FIGS. 3 to 6, a filter cover part 22 is integrally formed with the rear half of the case 21. The filter cover part 22 has a disc-shaped front wall 22a and a circumferential wall 22b connected to the circumferential edge of the front wall 22a. The circumferential wall 22b projects backwards from the circumferential edge of the front wall 22a. Thus, the filter cover 22 is shaped like a dish and opens to the rear of the holder section 2d. When the dust-catching unit 15 is set in the holder section 2d, the filter cover part 22 is combined with the case holder 11, constituting a filter receptacle 23 in the holder section 2d. The filter receptacle 23 is an example of a receptacle section. It is located upstream of the motor-driven blower 4, with respect to the direction of airflow.

As shown in FIGS. 3, 4 and 7, the case 21 has an air inlet duct 24 and a fine-dust duct 25 that are formed integral with each other. The air inlet duct 24 projects toward the front of the case 21 from the center part of the front wall 22a of the filter cover part 22 and opens to the front of the case 21. The air inlet duct 24 is connected to the connection port 2b of the cleaner body 2 when the dust-catching unit 15 is set into the holder section 2d of the cleaner body 2.

The fine-dust duct 25 is located below the air inlet duct 24. The fine-dust duct 25 has a first outlet port 25a, a first inlet port 25b, and a second outlet port 25c. The first outlet port 25a opens in the lower part of the front wall 22a of the filter cover part 22. The first inlet port 25b opens in the right side of the front half of the case 21. The open end of the first inlet port 25b is framed with a seal member 26. The second outlet port 25c opens in the bottom of the front half of the case 21.

The second outlet port 25c is covered with an auxiliary filter 27. The auxiliary filter 27 is exposed to the fine-dust duct 25. The auxiliary filter 27 is preferably a pleated filter, i.e., a filter having a plurality of pleats. The pleats of the auxiliary filter 27 extend in the longitudinal direction of the case 21 and are arranged at intervals in the transverse direction of the case 21.

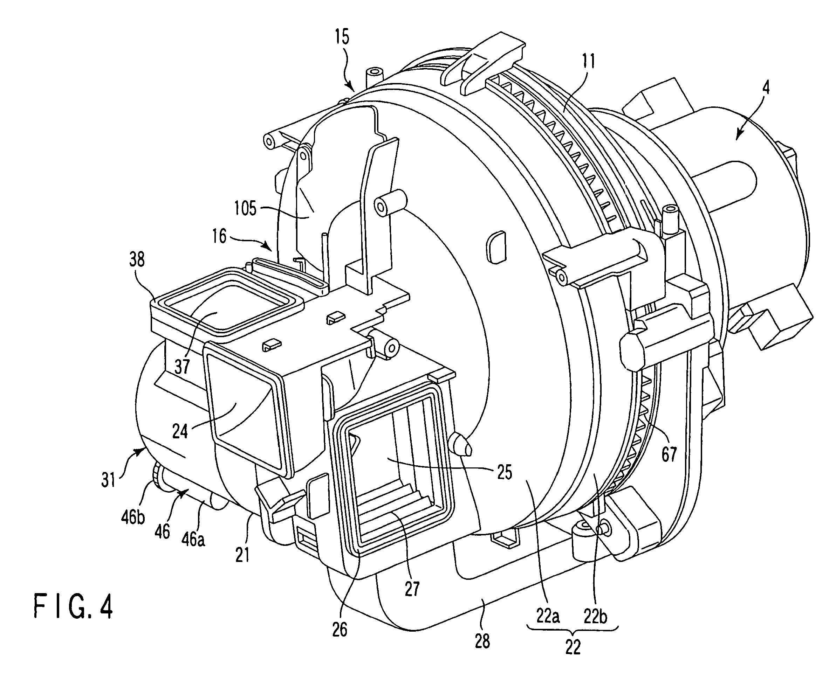

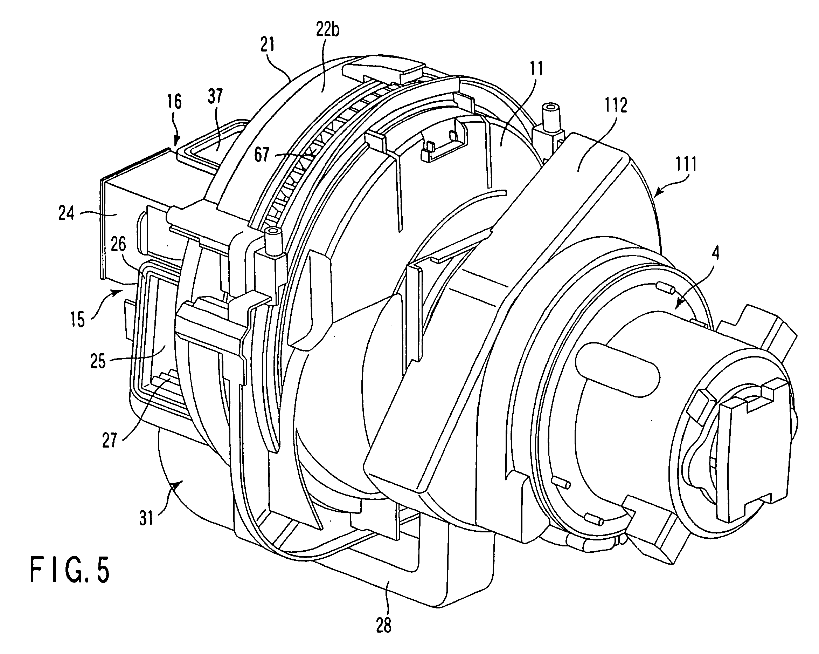

As shown in FIGS. 4, 5 and 7, a duct 28 is provided below the case 21. The duct 28 is secured to the cleaner body 2 and extends in the longitudinal direction of the cleaner body 2. The duct 28 has a fist open end 28a and a second open end 28b. The first open end 28a opens upwards at the front end of the duct 28. The first open end 28a is connected in airtight fashion to the second outlet port 25c of the fine-dust duct 25 when the dust-catching unit 15 is set in the holder section 2d of the cleaner body 2. The second open end 28b is located at the rear end of the duct 28 as shown in FIG. 5.

In the present embodiment, the auxiliary filter 27 covers the second outlet port 25c of the fine-dust duct 25. The auxiliary filter 27 may not cover the second outlet port 25c. Instead, it may be provided in, for example, the duct 28. If this is the case, the auxiliary filter 27 should better cover the fist open end 28a of the duct 28. In this configuration, the auxiliary filter 27 lies in the holder section 2d of the cleaner body 2. The maintenance of the auxiliary filter 27 can therefore be carried out in the holder section 2d.

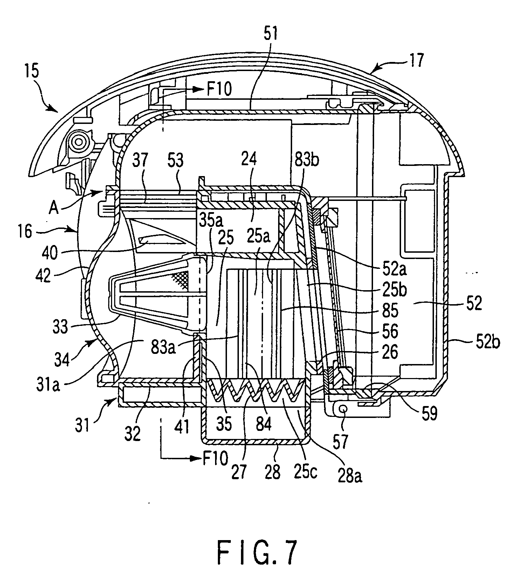

As FIGS. 7 to 10 show, the main body 16 of the dust-catching unit 15 comprises a separation section 31. The separation section 31 is designed to separate dust from the air drawn by the suction unit 3, by utilizing an inertial force, preferably a centrifugal force. It is located in front of the front wall 22a of the filter cover part 22.

The separation section 31 comprises a guide wall 32, a suction cylinder 33, and a cover 34. The guide wall 32 is shaped like a hollow cylinder, integrally formed with the case 21 and positioned adjacent to the air inlet duct 24 and fine-dust duct 25. The guide wall 32 is opposed to the first inlet port 25b of the fine-dust duct 25, across the fine-dust duct 25. A partition wall 35 partitions the guide wall 32 from the fine-dust duct 25 and also from the air inlet duct 24.

The suction cylinder 33 protrudes from the partition wall 35 and is surrounded by guide wall 32. The suction cylinder 33 has a cylindrical wall that is a mesh member that is made of synthetic resin such as nylon resin. The cylindrical wall is permeable to air and can therefore filter out dust from air. The suction cylinder 33 has a diameter that gradually decreases toward its distal end from the partition wall 35. The distal end of the suction cylinder 33 is closed. The interior of the suction cylinder 33 communicates with the interior of the fine-dust duct 25 via a through hole 35a made in the partition wall 35. The through hole 35a is a second inlet port that opens to the fine-dust duct 25.

As shown in FIGS. 7, 9 and 10, a separation chamber 31a, which is an annular space, is provided between the inner surface of the guide wall 32 and the circumferential wall of the suction cylinder 33. The upper part of the separation chamber 31a communicates with the air inlet duct 24. The rear part of the wall, which defines the air inlet duct 24, has a surface that inclines toward the separation chamber 31a. The rear part of the air inlet duct 24 communicates with the separation chamber 31a via a communication port 36 made in the partition wall 35. The communication port 36 lies between the guide wall 32 and the suction cylinder 33.

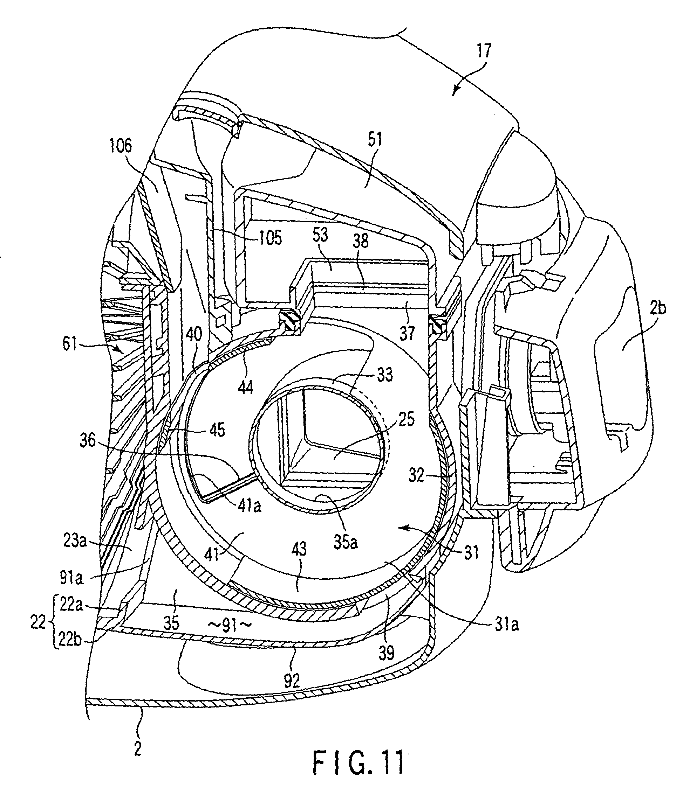

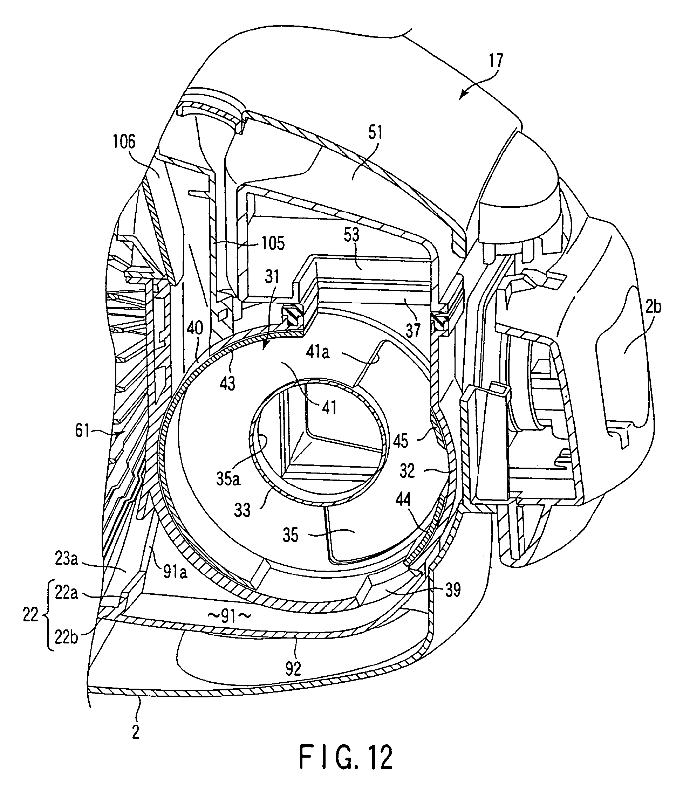

As FIGS. 11 and 12 show, the guide wall 32 has a dust port 37, a first dust-collecting hole 39, and a second dust-collecting hole 40. The dust port 37 is located at the upper part of the guide wall 32 and opens upwards from the guide wall 32. The open end of the dust port 37 is surrounded by an annular seal member 38. The first dust-collecting hole 39 is made in the lower part of the guide wall 32 and lies right below the dust port 37. The second dust-collecting hole 40 is made in the upper part of the guide wall 32 and lies adjacent to the dust port 37. The second dust-collecting hole 40 is positioned closer to the front wall 22a of the filter cover part 22 than to the dust port 37 and first dust-collecting hole 39.

As FIGS. 7, 11 and 12 show, the cover 34 comprises an end wall 41, an outer wall 42, and first to third circumferential walls 43, 44 and 45. The end wall 41 overlaps the partition wall 35 and can slide on the partition wall 35. The end wall 41 has a switching hole 41a that is as large as the communication port 36. The outer wall 42 is opposed to the end wall 41. The first to third circumferential walls 43, 44 and 45 constitute an example of a third shutter. The first to third circumferential walls 43, 44 and 45 extend between the outer circumferential edge of the end wall 41 and the outer circumferential edge of the outer wall 42 and are arranged in the circumferential direction of he end wall 41 and outer wall 42, each spaced apart from another. The cover 34 can rotate in the circumferential direction of the guide wall 32, because the first to third circumferential walls 43, 44 and 45 are fitted inside the guide wall 32.

The cover 34 can be rotated by a drive mechanism 46 shown in FIG. 22, between a first position and a second position. FIG. 11 shows the cover 34 that has been rotated to the first position. At the first position, the switching hole 41a made in the end wall 41 is aligned with the communication port 36 made in the partition wall 35, and the gap between the first and second circumferential walls 43 and 44 is aligned with the dust port 37. Further, the first circumferential wall 43 closes the first dust-collecting hole 39, and the gap between the second and third circumferential walls 44 and 45 is aligned with the second dust-collecting hole 40.

FIG. 12 shows the cover 34 that has been rotated to the second position. At the second position, the end wall 41 closes the communication port 36, and the partition wall 35 closes the switching hole 41a of the end wall 41. Further, the gap between the first and third circumferential walls 43 and 45 is aligned with the dust port 37. Still further, the first circumferential wall 43 closes the second dust-collecting hole 40, and the gap between the first and second circumferential walls 43 and 44 is aligned with the first dust-collecting hole 39. The guide wall 32 closes the gap between the second and third circumferential walls 44 and 45.

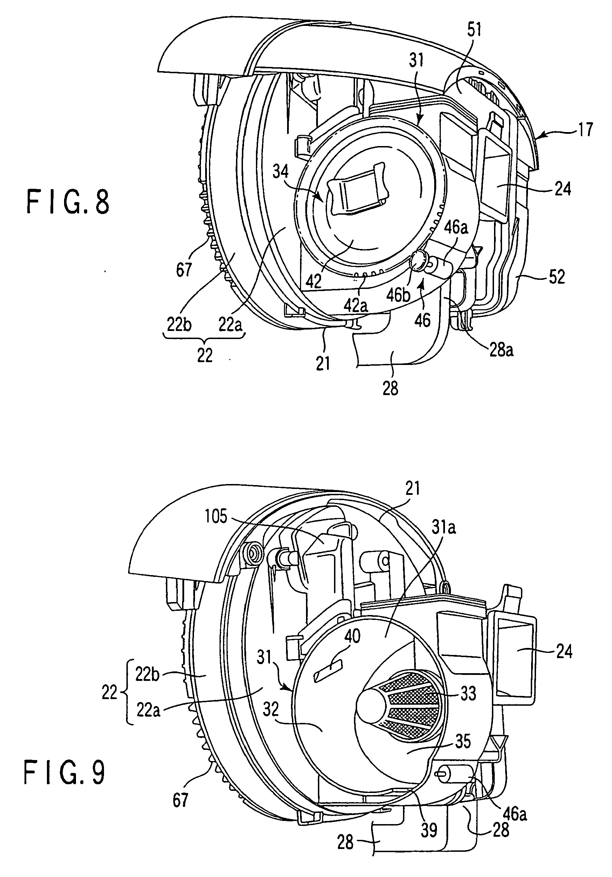

As shown in FIG. 8, the drive mechanism 46 for rotating the cover 34 comprises a plurality of teeth 42a, a first motor 46a, and a gear 46b. The teeth 42a are formed on the outer circumferential edge of the outer wall 42 of the cover 34. The first motor 46a can rotate in both the forward direction and the reverse direction. The gear 46b is coupled to the first motor 46a. The gear 46b is in mesh with the teeth 42a provided on the outer wall 42. Since the gear 46b meshes with the teeth 42a, the cover 34 can be rotated through an angle within a predetermined range, while being guided by the guide wall 32.

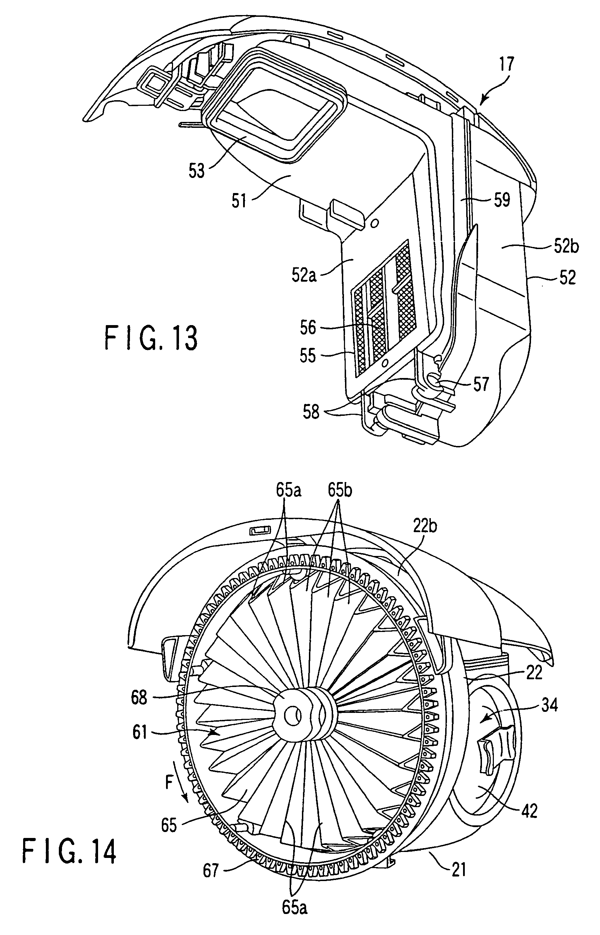

The dust-collecting case 17 of the dust-catching unit 15 is nothing more than an example of a dust-collecting section. The case 17 is configured to collect the dust the separation section 31 has separated from air. The dust-collecting case 17 cooperates with the separation section 31. The case 17 and the section 31 constitute a dust separation-collecting means A. As shown in FIGS. 7 and 13, the dust-collecting case 17 comprises a dust-transporting section 51 and a dust-accumulating section 52. The sections 51 and 52 communicate with each other. The dust-transporting section 51 extends in the widthwise direction of the cleaner body 2 and covers the air inlet duct 24 and separation section 31 from above. The section 51 has a connection port 53 in one end. The port 53 is connected to the dust port 37. Note that the port 53 can be disconnected from the dust port 37.

The dust-accumulating section 52 extends downwards from the other end of the dust-transporting section 51. The section 52 comprises a base 52a and a cover 52b. The base 52a is opposed to the separation section 31, across the air inlet duct 24 and fine-dust duct 25. An air duct 55 and a pair of bearing parts 58 are provided at the lower end of the base 52a. The air duct 55 can be detachably connected to the first inlet port 25b of the fine-dust duct 25. The air duct 55 is covered with a mesh member 56 from within the dust-accumulating section 52. The mesh member 56 is, for example, a thin stainless steel plate. The thin plate has a plurality of small holes over its surface. Therefore, the mesh member 56 does not allow the passage of dust particles that are larger than the small holes.

The cover 52b covers the base 52a from one side. The lower end of the cover 52b is coupled to the bearing parts 58 of the base 52a by a hinge shaft 57. The cover 52b can rotate around the hinge shaft 57 between an open position and a closed position. In the open position, the cover 52b inclines to one side of the base 52a, thus opening the dust-accumulating section 52. In the closed position, the cover 52b stands upright along the base 52a, thus closing the dust-accumulating section 52. The cover 52b can be held in the closed position when its upper end is engaged with an engagement member (not shown) provided on the dust-transporting section 51.

A seal member 59 is interposed between the base 52a and the cover 52b. The seal member 59 extends all around the base 52a and cover 52b, holding the junction between the base 52a and the cover 52b in airtight state.

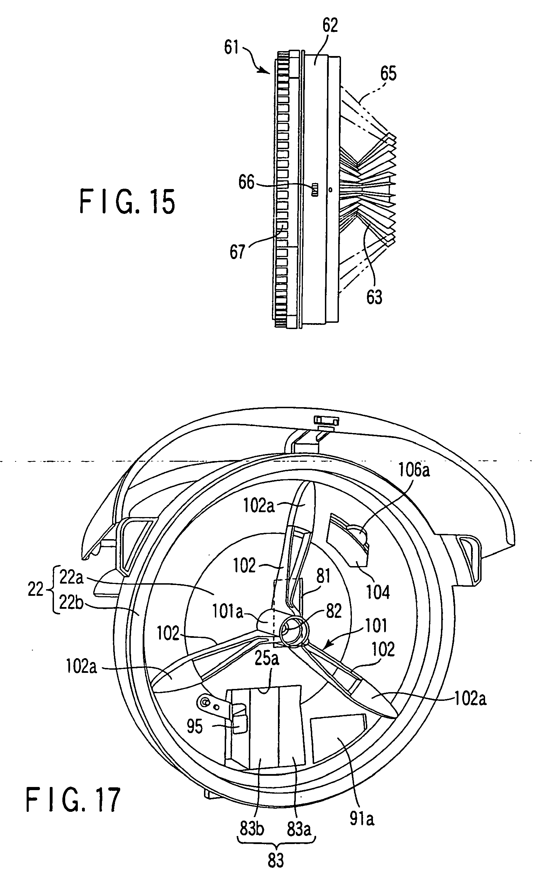

As FIG. 3 shows, the filter receptacle 23 lies at the back of the dust separation-collecting means A. The filter receptacle 23 holds a filter 61. The filer 61 is provided to catch the dust that has passed through the mesh member 56 set in the dust-accumulating section 52. As shown in FIGS. 14 and 15, the filter 61 comprises a roller-supporting wall 62, a filter frame 63, a bearing part 64 and a filter element 65.

The roller-supporting wall 62 is a hollow cylinder that has a smaller diameter than the filter cover part 22. The filter frame 63 is integrally formed with the roller-supporting wall 62 and located at the inner side of the wall 62. The bearing part 64 is integrally formed with the filter frame 63 and located at the center of the filter frame 63. The filter element 65 is supported to the filter frame 63. As FIG. 14 shows, the filter element 65 has a plurality of pleats 65a, which the filter frame 63 has formed. The filter element 65 and the filter frame 63 constitute a pleated filter. The pleats 65a of the filter element 65 extend in the radial direction from the center of the bearing part 64. The filter element 65 has a plurality of grooves 65b, each extending between two adjacent pleats 65a. Each groove 65b extends straight from the bearing part 64 toward the roller-supporting wall 62. The grooves 65b gradually widens from the bearing part 64 toward the roller-supporting wall 62.

The filter 61 has a front surface and a rear surface. The front surface is exposed to the filter receptacle 23. The rear surface faces the standing wall 12 of the case holder 11. The grooves 65b of the filter element 65 are exposed at the front and rear surfaces of the filter 61. The grooves 65b in the front surface of the filter 61 open, at one end, to the outer circumferential surface of the bearing part 64, and are closed, at the other end, by the roller-supporting wall 62. The grooves 65b in the rear surface of the filter 61 are closed, at one end, by the bearing part 64, and open, at the other end, to the roller-supporting wall 62.

A plurality of rollers 66 (only one shown in FIG. 15) are supported on the outer circumferential surface of the roller-supporting wall 62. The rollers 66 are arrange at intervals in the circumferential direction of the roller-supporting wall 62. A driven gear 67 is integrally formed with the rear edge of the roller-supporting wall 62. A knob 68 is coupled to the rear end of the bearing part 64. The knob 68 is located at the center of the filter frame 63 and protrudes from the back of the filter 61.

As shown in FIG. 3, the filter 61 is inserted inside the filter cover part 22 from the back of the case 21 and can be taken out of the filter cover part 22. The roller-supporting wall 62 of the filter 61 enters inside the circumferential wall 22b of the filter cover part 22. The rollers 66 supported on the roller-supporting wall 62 contact the inner surface of the circumferential wall 22b. The filter 61 is therefore supported on the filter cover part 22 and can rotate with the circumferential wall 22b used as a guide. The driven gear 67, which is located at the rear end of the roller-supporting wall 62, is exposed outside the filter receptacle 23, at the rear end of the filter cover part 22.

The gap between the roller-supporting wall 62 and the circumferential wall 22b of the filter cover part 22 is filled with a seal member (not shown). The seal member lies closer to the front wall 22a of the filter cover part 22 than to the rollers 66. This seal member maintains the filter receptacle 23 in an airtight state. In other words, an airtight chamber 23a is provided between the filter 61 and the front wall 22a of the filter cover part 22. The front surface of the filter 61 is exposed to the airtight chamber 23a.

As shown in FIG. 2, a second motor 71 and a driving gear 72 are provided on the bottom of the holder section 2d of the cleaner body 2. The second motor 71 is an example of a driving unit. The driving gear 72 is driven when it receives a torque from the second motor 71. The driving gear 72 is set in mesh with the driven gear 67 of the filter 61. Hence, when the second motor 71 is driven, the driving gear 72 transmits the torque of the second motor 71 to the driven gear 67. As a result, the filter 61 therefore rotates at a constant speed. In this embodiment, the filter 61 rotates counterclockwise, or in the direction of the arrow F in FIG. 14, as viewed from the back of the filter receptacle 23.

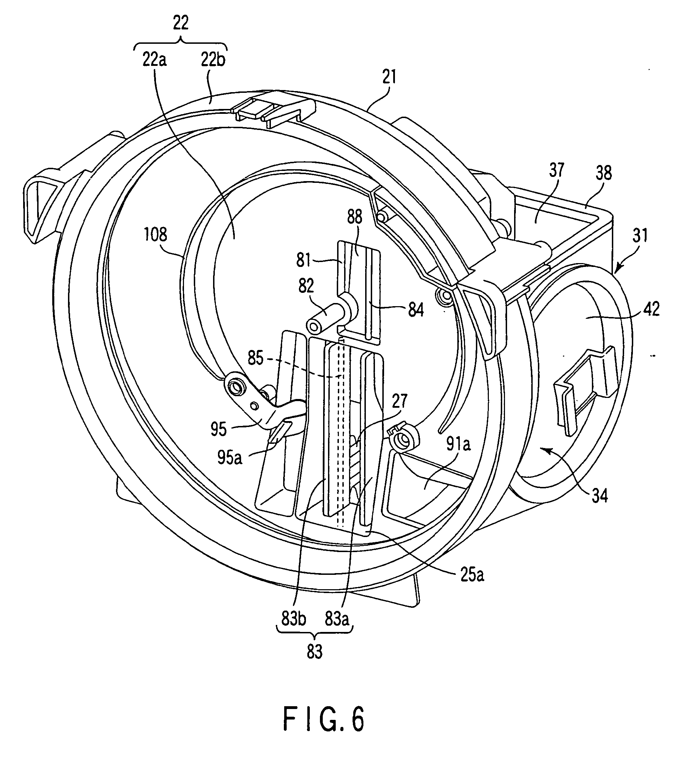

The front wall 22a of the filter cover part 22 partitions the separation section 31 and the airtight chamber 23a from each other. As shown in FIGS. 3 and 6, an air inlet port 81 and a support shaft 82 are provided at the center part of the front wall 22a. The air inlet port 81 and the support shaft 82 are located right above the first outlet port 25a of the fine-dust duct 25. The port 81 and the shaft 82 lie adjacent to each other. The support shaft 82 protrudes from the front wall 22a toward the airtight chamber 23a.

The air inlet port 81 is a hole having a rectangular cross section and extends vertically. The lower end of the port 81 faces the center part of the front surface of the filter 61 to guide air to the center part of the front surface of the filter 61. The air inlet port 81 comes to face the grooves 65a of the filter element 65, one after another, and to blow air into the grooves 65b, as the filter 61 rotates counterclockwise.

As FIG. 6 shows, a first shutter 83 is provided in the first outlet port 25a of the fine-dust duct 25. The first shutter 83 has a pair of shutter members 83a and 83b, each shaped like a plate. The shutter members 83a and 83b are supported on the front wall 22a by pivotal shafts 84 and 85, respectively. The pivotal shafts 84 and 85 stand upright. The shafts 84 and 85 are coupled by a coupling mechanism (not shown) so that they rotate around their axes at the same time. The coupling mechanism is driven by a third motor 86 that is shown in FIG. 22.

The third motor 86 can rotate in both the forward direction and the reverse direction. The third motor 86 drives the coupling mechanism and the pivotal shafts 84 and 85, thereby rotating the shutter members 83a and 83b through 90°, each between a closed position and an open position. FIG. 17 shows the shutter members 83a and 83b, both rotated to the closed position. In the closed position, the shutter members 83 and 83b are aligned and connected in a row in the first outlet port 25a of the fine-dust duct 25, closing the first outlet port 25a. FIGS. 6 and 7 show the shutter members 83a and 83b rotated to the open position. In the open position, the shutter members 83a and 83b oppose each other in the first outlet port 25a and are spaced from each other. Thus, the shutter members 83a and 83b open the first outlet port 25a. While the shutter members 83a and 83b remain rotated to the open position, they project into the airtight chamber 23a from the first outlet port 25a.

If the first shutter is composed of one plate only, it will project into the airtight chamber 23a for a long distance when the first shutter opens. Consequently, the first shutter must be spaced long from the filter 61, not to interfere with the filter 61.

In the present embodiment, the first shutter 83 is divided into two shutter members 83a and 83b. The shutter members 83a and 83b are, of course, small. Hence, the shutter members 83a and 83b project into the airtight chamber 23a for a short distance when the shutter 83 opens. The filter 61 can therefore be positioned near the front wall 22a of the filter cover part 22. This renders the airtight chamber 23a compact and small.

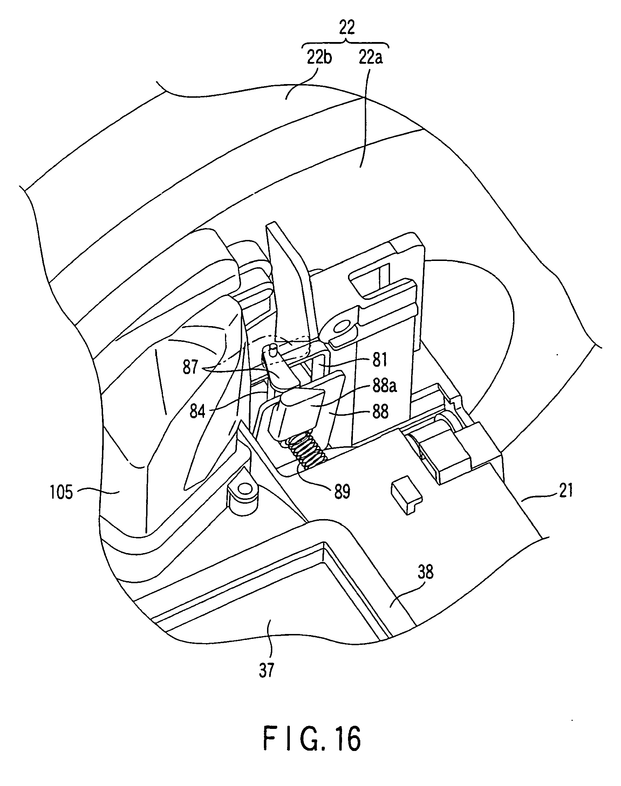

As shown in FIGS. 6 and 16, the pivotal shaft 84 extends, with its upper end lying above the air inlet port 81. A plate cam 87 is secured to the upper end of the pivotal shaft 84. The plate cam 87 rotates when the pivotal shaft 87 rotates. The plate cam 87 is positioned between the front wall 22a of the filter cover part 22 and the dust-catching unit 15.

A second shutter 88 is provided between the front wall 22a of the filter cover part 22 and the dust-catching unit 15. The second shutter 88 is supported on the front wall 22a and can rotate between an open position and a closed position. In the closed position, the second shutter 88 closes the air inlet port 81. In the open position, the second shutter 88 opens the air inlet port 81. A coil spring 89 biases the second shutter 88 toward the closed position at all times.

As FIG. 16 shows, a cam receiver 88a is integrally formed with the second shutter 88. The cam receiver 88a contacts the plate cam 87. When the plate cam 87 pushes the cam receiver 88a, the second shutter 88 rotates against the bias of the coil spring 89, from the closed position to the open position.

Coupled by the pivotal shaft 84, the second shutter 88 and the first shutter 83 operate in interlock. While the first shutter 83 keeps the first outlet port 25a closed, the plate cam 87 pushes the cam receiver 88a as the solid line indicates in FIG. 16. The second shutter 88 therefore rotates to the open position, opening the air inlet port 81. Conversely, while the first shutter 83 keeps the first outlet port 25a open, the plate cam 87 lies near the front wall 22a, away from the cam receiver 88a, as the two-dot dashed line indicates in FIG. 16. The plate cam 87 no longer pushes the cam receiver 88a. The second shutter 88 therefore rotates back to the closed position, closing the air inlet port 81.

As shown in FIGS. 11 and 12, the separation chamber 31a, i.e., a gap between the inner surface of the guide wall 32 and the circumferential wall of the suction cylinder 33, communicates with the airtight chamber 23a via a return path 91. The return path 91 allows air to flow from the airtight chamber 23a into the separation chamber 31a. Hence, the separation chamber 31a is located downstream of the airtight chamber 23a, with respect to the direction in which air flows and with respect to the return path 91. The return path 91 is provided between a bottom plate 92 and the guide wall 32 that faces the bottom plate 92. The bottom plate 92 is located on the front half of the bottom of the case 21 and extends between the lower end of the filter cover part 22 and the front end of the guide wall 32. The return path 91 has an inlet port 91a at the upstream end. The inlet port 91a opens to the lower end of the front wall 22a and is located adjacent to the first outlet port 25a. The downstream end of the return path 91 communicates with the first dust-collecting hole 39 of the separation section 31.

The cover 34 for opening and closing the first dust-collecting hole 39 and the first shutter 83 operate in interlock with each other. The first shutter 83 remains rotated to the open position as shown in FIG. 11, while the cover 34 keeps the first dust-collecting hole 39 that communicates with the downstream end of the return path 91 closed. On the other hand, the first shutter 83 remains rotated to the closed position as shown in FIG. 12 while the cover 34 keeps the first dust-collecting hole 39 open.

As FIGS. 6 and 17 show, a dust-removing member 95 is supported on the front wall 22a of the filter cover part 22. The dust-removing member 95 is an example of a dust-removing means for removing dust from the filter 61. The member 95 is exposed to the airtight chamber 23a. The dust-removing member 95 is opposed to the inlet port 91a of the return path 91, across the first outlet port 25a. In other words, the dust-removing member 95 is located upstream of the inlet port 91a of the return path 91, with respect to the direction in which the filter 61 rotates.

The dust-removing member 95 is made by bending, for example, a leaf spring. The member 95 has a distal part 95a that projects toward the airtight chamber 23a. The distal part 95a of the dust-removing member 95 faces the front-lower part of the filter 61 and is interposed between the two adjacent pleats 65a of the filter element 65. In other words, the distal part 95a of the dust-removing member 95 protrudes a little into the groove 65b defined by the adjacent pleats 65a, intersecting with the locus of rotation of the filter 16.

The filter 61 rotates when it receives a torque from the second motor 71. At this time, the pleats 65a of the filter element 65 contacting each other move, one after another, over the distal part 95a of the dust-removing member 95. Thus, the dust-removing member 95 flicks the pleats 65a, vibrating the pleats 65a. As a result, dust falls off from the front surface of the filter 61.

Further, the distal part 95a of the dust-removing member 95 is flicked as it moves over the pleats 65a of the filter element 65 while remaining in contact with the pleats 65a. The distal end part 95a therefore vibrates, generating sound. The sound propagates outside the vacuum cleaner 1 as long as the filter 61 rotates. The user of the vacuum cleaner 1 can therefore know that the dust is being removed from the filter 61.

As shown in FIG. 17, a dust-exhausting member 101 is provided in the airtight chamber 23a of the filter receptacle 23. The dust-exhausting member 101 comprises a boss part 101a and a plurality of arms 102. The boss part 101a is a hollow cylinder and rotatably mounted on the support shaft 82 that extends from the front wall 22a toward the airtight chamber 23a. The arms 102 project in radial direction from the outer circumferential surface of the boss part 101a. A scraping member 102a is secured to the distal end of each arm 102. The scraping members 102a are in sliding contact with the inner surface of the front wall 22a, which is inside the airtight chamber 23a. They scrape dust from the bottom of the airtight chamber 23a and transport the dust to the upper part of the airtight chamber 23a along the inner surface of the front wall 22a when the dust-exhausting member 101 rotates.

As shown in FIG. 6, a dust-receiving wall 108 is integrally formed on the inner surface of the front wall 22a. The dust-receiving wall 108 is arching around the support shaft 82. The wall 108 surrounds the support shaft 82, the air inlet port 81 and the upper half of the first outlet port 25a. The dust-receiving wall 108 lies inside the locus of the scraping member 102a and prevents dust from falling from the scraping members 102a into the first outlet port 25a.

The bearing part 64 of the filter 61 is removably mounted on the boss part 101a of the dust-exhausting member 101. The bearing part 64 contacts the roots of the arms 102. The dust-exhausting member 101 can therefore rotate as the filter 61 rotates.

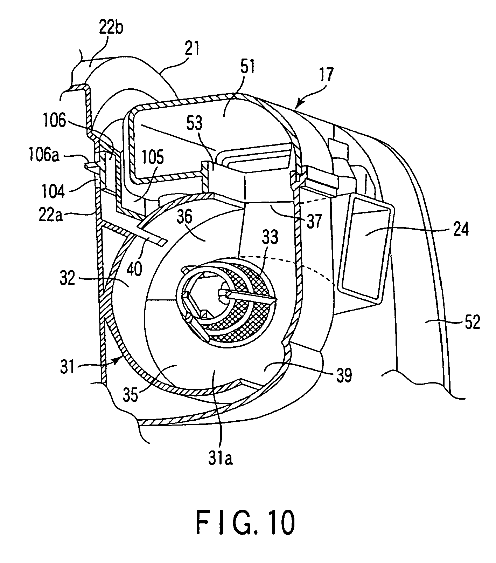

As FIG. 17 shows, the front wall 22a has a dust outlet port 104 in the upper part. The dust outlet port 104 opens above the path in which the scraping members 102a move, and is located above the second dust-collecting hole 40 of the separation section 31. As shown in FIGS. 9 and 10, a trough 105 is secured to the outer surface of the front wall 22a. The trough 105 stands, connecting the dust outlet port 104 to the second dust-collecting hole 40. The upper end of the trough 105 covers the dust outlet port 104. The lower end of the trough 105 covers the second dust-collecting hole 40.

As shown in FIG. 10, a third shutter 106 is provided in the dust outlet port 104. The third shutter 106 can rotate between an open position and a closed position, where it opens and closes the dust outlet port 104, respectively. The third shutter 106 is always biased toward the closed position by a coil spring (not shown). The coil spring is interposed between the third shutter 106 and the upper end of the trough 105.

The third shutter 106 has a cam part 106a. The cam part 106a protrudes from the dust outlet port 104 into the airtight chamber 23a and can contact the scraping members 102a of the arm 102. Hence, the scraping members 102a push the cam part 106a when it moves across the dust outlet port 104 as the dust-exhausting member 101 rotates. As a result, the third shutter 106 rotates from the closed position to the open position. The dust outlet port 104 is thereby opened. When the scraping members 102a pass by the dust outlet port 104, they no longer push the cam part 106a. The third shutter 106 therefore returns to the closed position, closing the dust outlet port 104.

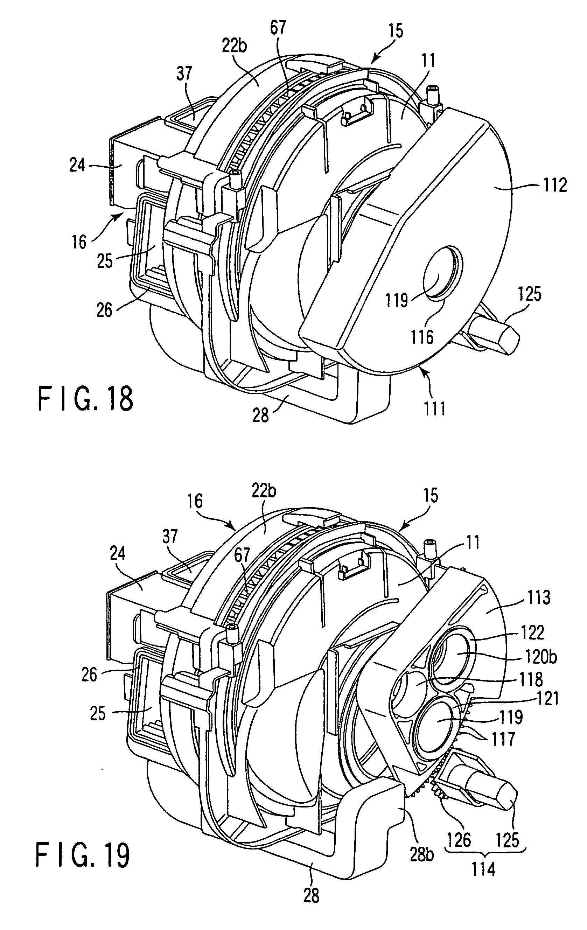

As FIG. 3 shows, an airflow control device 111 is incorporated in the rear half of the cleaner body 2. The airflow control device 111 is arranged between the motor-driven blower 4 and the case holder 11. As shown in FIGS. 18 and 19, the airflow control device 111 comprises a case 112, a control member 113, and a driven unit 114. The case 112 has a front wall and a rear wall. The front wall of the case 112 faces the case holder 11 and has an air inlet port 115. The air inlet port 115 communicates with the through hole 11a of the case holder 11. The rear wall of the case 112 abuts on the support ring 4b provided at the front end of the motor-driven blower 4. The rear wall of the case 112 has an air outlet port 116. The air outlet port 116 is opposed to the air inlet port 4a of the blower 4 and the air inlet port 115. As FIG. 3 shows, the through hole 11a, air inlet port 115, air outlet port 116 and air inlet port 4a are arranged in a row on the axis of the motor-driven blower 4. The second open end 28b of the duct 28 is connected to the lower end of the case 112. The second end 28b of the duct 28 opens to the interior of the case 112.

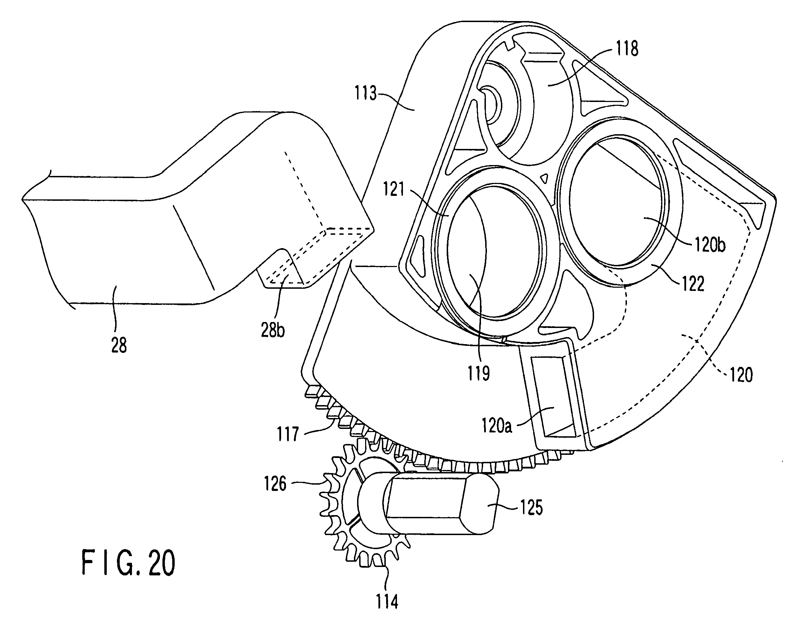

As shown in FIGS. 19 and 20, the control member 113 is shaped like a fan. The control member 113 has a plurality of teeth 117 on the arching outer circumferential edge. The control member 113 has a shaft hole 118 in its pivot part. Except the teeth 117, the control member 113 is provided inside the case 112. The pivotal shaft (not shown) of the case 112 is fitted in the shaft hole 118 of the control member 113. The control member 113 can therefore rotate around the axis of the shaft hole 118, between a first position and a second position.

The control member 113 has an air hole 119 and a switching passage 120. The air hole 119 is a through hole. The air hole 119 has a first end opening at the front surface of the control member 113 and a second end opening at the rear surface of the control member 113. The air hole 119 should preferably be a tapered hole, the diameter of which gradually decreases from the first end to the second end. The diameter at the first end is equal to, a little smaller than, the air inlet port 115 of the case 112. The diameter at the second end is equal to, or a little larger than, the air outlet port 116 of the case 112.

The switching passage 120 has an inlet port 120a and an outlet port 120b. The inlet port 120a lies in the case 112 and opens to the second end 28b of the duct 28. The outlet port 120b opens at the rear surface of the control member 113 and lies adjacent to the second end of the air hole 119. Therefore, the outlet port 120b and the air hole 119 are arranged in the direction the control member 113 rotates.

As shown in FIGS. 19 and 20, a smooth seal ring 121 is attached to the second end of the air hole 119. Similarly, a smooth seal ring 122 is attached to the outlet port 120b. The seal rings 121 and 122 are set in sliding contact with the inner surface of the case 112, providing an airtight space between the case 112 and the second end of the air hole 119 and an airtight space between the case 112 and the outlet port 120b.

The driven unit 114 comprises a fourth motor 125 and a driving gear 126. The fourth motor 125 is supported on the case 112 and can rotate in both the forward direction and the reverse direction. The driving gear 126 rotates when it receives a torque from the fourth motor 125. The driving gear 126 is set in mesh with the teeth 117 of the control member 113. Thus, the fourth motor 125 can rotate the driving gear 126, which in turn can rotate the control member 113 through a predetermined angle, between the first position and the second position.

FIG. 20 shows the control member 113 rotated to the first position. While the control member 113 stays in the first position, the inlet port 120a of the switching passage 120 is disconnected from the second end 28b of the duct 28, and the air hole 119 lies between the air inlet port 115 and air outlet port 116 of the case 112. The inlet port 4a of the motor-driven blower 4 therefore communicates with the filter receptacle 23. As a result, the negative pressure generated by the motor-driven blower 4 acts on the filter 61.

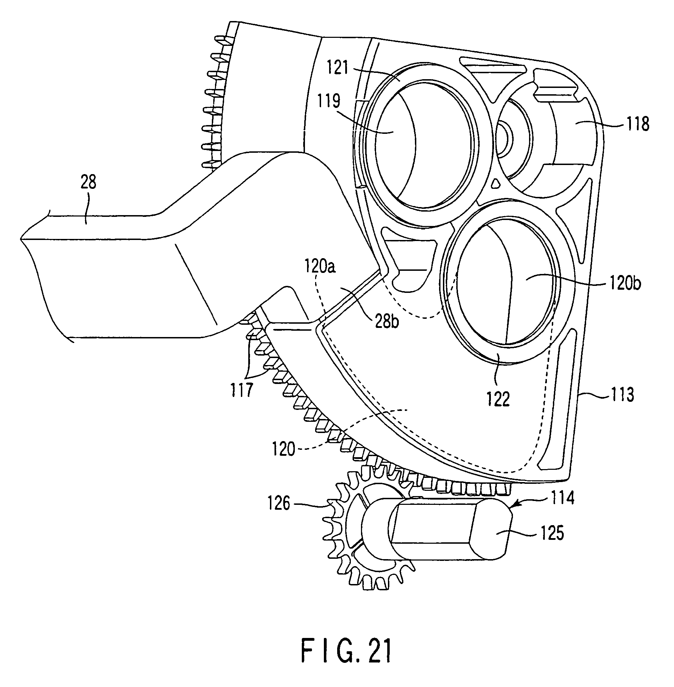

FIG. 21 shows the control member 113 rotated to the second position. While the control member 113 stays in the second position, the inlet port 120a of the switching passage 120 is connected to the second end 28b of the duct 28, whereby the duct 28 and the switching passage 120 communicate with each other. Further, the air hole 119 moves away from a position between the air inlet port 115 and air outlet port 116 of the case 112, and the outlet port 120b of the switching passage 120 comes to face the air outlet port 116. The duct 28 therefore connects the inlet port 4a of the motor-driven blower 4 to the fine-dust duct 25 of the main body 16. As a result, the negative pressure generated by the motor-driven blower 4 is applied directly into the fine-dust duct 25, by-passing the filter 61.

The cleaner body 2 incorporates the control device 9. The control device 9 controls the operating mode of the vacuum cleaner 1. The vacuum cleaner 1 according to this embodiment can operate in a first mode and a second mode. The first mode is an ordinary cleaning mode, and the second mode is an internal cleaning mode. The control device 9 incorporates a wiring board on which various circuit components including a CPU are mounted. The control device 9 controls the motor-driven blower 4 and the first to fourth motors 46a, 71, 86 and 125, in accordance with the instructions supplied from the operation panel 8. Further, the control device 9 controls a notification means 131, making the means 131 inform the user that the vacuum cleaner 1 is switched to the internal cleaning mode as the air-purge button 8a of the operation panel 8 is pushed. The notification means 131 should preferably be, for example, a lamp that blinks, or a buzzer that generates sound, or a speaker that generates an oral message.

While the vacuum cleaner 1 remains in the ordinary cleaning mode, the first shutter 83 stays in the open position as shown in FIG. 7. The first outlet port 25a of the fine-dust duct 25 therefore remains open. In the ordinary cleaning mode, the second shutter 88 stays in the closed position, and the air inlet port 81 is closed. Further, as shown in FIG. 11, the cover 34 closes the first dust-collecting hole 39 of the separation section 31, and at the same time opens the second dust-collecting hole 40 and the dust port 37. In addition, the switching hole 41a of the cover 34 communicates with the communication port 36 made in the partition wall 35.

While the vacuum cleaner 1 remains in the ordinary cleaning mode, the control member 113 of the airflow control device 111 stays in the first position. The filter receptacle 23 therefore communicates with the inlet port 4a of the motor-driven blower 4 through the through hole 11a of the case holder 11. Further, the inlet port 120a of the switching passage 120 is disconnected from the second end 28b of the duct 28, and the negative pressure generated by the motor-driven blower 4 is not applied into the second outlet port 25c of the fine-dust duct 25.

When the motor-driven blower 4 starts operating, it generates a negative pressure, which acts on the filter receptacle 23, fine-dust duct 25 and air inlet duct 24. Thus, the dust is drawn, together with air, from the floor through the suction unit 3 into the connection port 2b of the cleaner body 2. The air containing the dust undergoes the separation performed in the separation section 31 by virtue of an inertial force and the filtering in the filter 61, as it passes through the dust-catching unit 15. The dust is thereby removed from the air. A part of the air, now containing no dust and therefore clean, is drawn from the through hole 11a via the air hole 119 into the motor-driven blower 4. The remaining part of the clean air is discharged from the vacuum cleaner 1, first through the motor-driven blower 4 and then through the exhaust ports 2c of the cleaner body 2.

The airflow reaching the motor-driven blower 4 from the air inlet duct 24 will be referred to as "first airflow." The first airflow goes through a first air passage, which includes a first upstream path, a second upstream path, and a downstream path. The first upstream path is constituted by the air inlet duct 24, separation chamber 31a, suction cylinder 33 and fine-dust duct 25. The second upstream path is constituted by the air inlet duct 24, separation chamber 31a, suction cylinder 33, dust-collecting case 17 and fine-dust duct 25. The downstream path is constituted by the filter receptacle 23, through hole 11a, air inlet port 115 of the case 112, air hole 119 of the control member 113, and air outlet port 116 of the case 112. Note that the filter receptacle 23 is connected to the fine-dust duct 25.

The dust-catching unit 15 separates dust from air as will be explained below. The air drawn by the suction unit 3 into the connection port 2b of the cleaner body 2 and containing dust flows downwards and slantwise into the separation chamber 31a from the air inlet duct 24 through the communication port 36. Since the separation chamber 31a is an annular passage, the air makes an airflow that swirls along the guide wall 32. The swirling air applies a centrifugal force to the dust that is contained in the air. As a result, the dust particles having large mass move to the guide wall 32 by their inertia and then toward the dust port 37 along the inner surface of the guide wall 32. The dust particles of large mass pass, together with air, into the dust-transporting section 51 of the dust-collecting case 17 through the dust port 37 and connection port 53.

A part of the air, which has flown into the separation chamber 31a and which contains fine particles having small mass is drawn into the fine-dust duct 25 from the hole 35a through the suction cylinder 33. Thus, the dust particles of large mass are removed from the first air flow in the separation chamber 31a.

The remaining part of the air, which has flown into the dust-transporting section 51 of the dust-collecting case 17 and which contains dust particles of large mass, flows into the dust-accumulating section 52 that constitutes the second upstream path. This air flows through the mesh member 56 into the fine-dust duct 25. In the fine-dust duct 25, the air meets the air that has passed through the suction cylinder 33. The suction cylinder 33 catches the large dust particles of large mass and retained in the dust-accumulating section 52. On the other hand, the fine dust particles of small mass flow, together with the air, into the fine-dust duct 25 through the first inlet port 25b and the through hole 35a.

Thus, the large dust particles contained in the first airflow and having large mass are removed from the air while the air is flowing through the first and second upstream paths and are eventually accumulated in the dust-accumulating section 52. Meanwhile, the small dust particles having small mass passes, along with the air, through the first inlet port 25a and the through hole 35a and flows into the fine-dust duct 25.

While the air containing the small dust particles is flowing through the downstream path, the small dust particles are filtered out. That is, the air that has flown into the fine-dust duct 25 is drawn into the filter receptacle 23 through the first outlet port 25a. This air passes through the filter element 65 of the filter 61. The filter element 65 catches the fine dust particles that have passed through the separation section 31. The fine dust particles thus caught stick to the front surface of the filter 61.

The clean air, i.e., containing no dust, is drawn from the through hole 11a of the case holder 11 into the motor-driven blower 4 through the air inlet port 115, the air hole 119 and the air outlet port 116.

When a predetermined time elapses after the vacuum cleaner 1 has started ordinary cleaning, or when the cleaner 1 finishes the ordinary cleaning, the cleaner 1 starts an automatic dust-removing process. In the automatic dust-removing process, the second motor 71 is driven for a predetermined time while the cover 34 keeps the first dust-collecting hole 39 closed, as shown in FIG. 11. The torque of the second motor 71 is transmitted to the filter 61 via the driving gear 72 and driven gear 67. The filter 61 rotates through an angle greater than 360°. As the filter 61 so rotates, the pleats 65a of the filter element 65 sequentially move over the dust-removing member 95. In other words, the dust-removing member 95 flicks the pleats 65a, one after another. The fine dust particles are thereby made to fall from mainly the front surface of the filter 61 into the airtight chamber 23a.

As shown in FIG. 6, the dust-removing member 95 is located at the lower part of the front wall 22a. The dust-removing member 95 therefore flicks the pleats 65a at a position near the bottom of the airtight chamber 23a. This prevents dust from remaining in those parts of the pleats 65a which lie at the upper part of the airtight chamber 23a. Hence, the dust falling from the pleats 65a scarcely stick to the filter element 65 again.

The dust that has fallen from the filter element 65 accumulates on the airtight chamber 23a. The dust thus accumulating is collected by the separation section 31, as will be described below.

The dust-exhausting member 101, which is provided in the airtight chamber 23a, rotates as the filter 61 rotates. When the scraping members 102a of the scraping members 102a reaches the bottom of the airtight chamber 23a, it scrapes up the dust from the bottom of the airtight chamber 23a toward the dust outlet port 104 made in the upper part of the airtight chamber 23a. The scraping members 102a pass through the dust outlet port 104 as the dust-exhausting member 101 rotates. AT this time, the scraping members 102a push the cam part 106a of the third shutter 106 that now closes the outlet port 104. As the cam part 106a is pushed, the third shutter 106 rotates from the closed position to the open position. The outlet port 104 is thereby opened.

As a result, the dust scraped up by the scraping members 102a is guided from the outlet port 104 to the trough 105 as the scraping members 102a passes through the outlet port 104. In the trough 105, the dust falls toward the second dust-collecting hole 40. The dust is then moved back from the second dust-collecting hole 40 into the separation chamber 31a. A grater part of the dust moved back into the separation chamber 31a is transported to the dust-accumulating section 52 through the second upstream path when the vacuum cleaner 1 starts the next cleaning operation. The remaining part of the dust is returned to the fine-dust duct 25 through the first upstream path.

While power is being supplied to the vacuum cleaner, the user may operate the air-purge button 8a of the operation panel 8. Then, the operating mode of the vacuum cleaner 1 changes from the cleaning mode to the internal cleaning mode. In the internal cleaning mode, the dust is removed from the filter 61 and the airtight chamber 23a is cleaned with airflow. That is, so-called air purge is performed for a preset time in accordance with the instructions from the control device 9.

The dust is removed and the airtight chamber 23a is cleaned, as follows. First, the third motor 86 rotates the first shutter 83 by 90°, from the open position to the closed position, closing the first outlet port 25a of the fine-dust duct 25. At the same time, the plate cam 87, which is secured to the pivotal shaft 84, rotates by 90° as illustrated in FIG. 16. The second shutter 88 therefore rotates from the closed position to the open position against the bias of the coil spring 89. The air inlet port 81 is thereby opened.

In synchronism with the third motor 86, the first motor 46a is driven for the preset time. The first motor 46a rotates the gear 46b, which in turn rotates the cover 34 to the second position shown in FIG. 12. While the cover 34 stays in the second position, the first dust-collecting hole 39 and the dust port 37 remains open. Therefore, the airtight chamber 23a of the filter receptacle 23 communicates with the separation chamber 31a via the return path 91, and the dust-collecting case 17 communicates with the separation chamber 31a via the dust port 37. Further, first circumferential wall 43 of the cover 34 keeps the second dust-collecting hole 40 closed, and the end wall 41 of the cover 34 keeps the communication port 36 located at the upstream end of the separation chamber 31a closed.

In synchronism with the rotation of the cover 34, the fourth motor 125 is driven for a preset time. The fourth motor 125 rotates the driving gear 126, which in turn rotates the control member 113 of the airflow control device 111 to the second position shown in FIG. 21. When the control member 113 is rotated to the second position, the air hole 119 of the control member 113 is shifted from both the air inlet port 115 and the air outlet port 116 of the case 112. Instead, the outlet port 120b of the switching passage 120 of the control member 113 is connected to the air outlet port 116 of the case 112, and the air inlet port 115 of the case 112 is closed with the front surface of the control member 113. Further, the inlet port 120a of the switching passage 120 of the control member 113 is connected to the second end 28b of the duct 28. The duct 28 therefore connects the second outlet port 25c of the fine-dust duct 25 to the switching passage 120 of the control member 113.

Thereafter, the motor-driven blower 4 starts operating and the second motor 71 starts working to remove dust from the filter 61. The dust removal may be started before the motor-driven blower 4 is operated.

When the motor-driven blower 4 starts operating, a negative pressure acts in the air inlet port 81 that opens to the airtight chamber 23a. Air is therefore drawn from outside the dust-catching unit 15, directly into the airtight chamber 23a through the air inlet port 81. At this point, the fist shutter 83 closes the first outlet port 25a that connects the fine-dust duct 25 and the airtight chamber 23a, and the cover 34 closes the communication port 36 that connects the separation chamber 31a and the air inlet duct 24. Hence, the negative pressure never acts in the connection port 2b of the cleaner body 2.

The air drawn through the air inlet port 81 flows in the airtight chamber 23a toward the inlet port 91a of the return path 91. While so flowing, the air expels and discharges the dust from the front surface of the filter 16, the dust from the inner surface of the front wall 22a, which is exposed to the airtight chamber 23a, and the dust floating in the airtight chamber 23a. The cleaning performed by using air is generally known as air purge. The air that has come to contain dust while passing through the airtight chamber 23a is drawn into the return path 91 through the inlet port 91a. Then, the dust in the air is filtered out by the auxiliary filter 27 provided in the separation section 31. The air, now containing no dust and therefore clean, is drawn into the motor-driven blower 4 through the duct 28 and the switching passage 120 of the control member 113. The air then passes through the motor-driven blower 4 and is discharged from the vacuum cleaner 1 through the exhaust ports 2c of the cleaner body 2.

The airflow from the air inlet port 81 to the motor-driven blower 4 will be called the "second airflow" hereinafter. The second air passage through which the second airflow goes includes an inlet path, an intermediate path, and an outlet path. The airtight chamber 23a to which the air inlet port 81 opens and the auxiliary filter 27 are provided in the second air passage. The auxiliary filter 27 is located downstream of the airtight chamber 23a, with respect to the direction of the second airflow.

The inlet path is constituted by the airflow from the air inlet port 81, airtight chamber 23a and return path 91. The intermediate path is of the same configuration as the first and second upstream paths of the first air passage. In other words, the first and second upstream paths work as the intermediate path of the second air passage. The outlet path is composed of the duct 28, the switching passage 120 of the control member 113 and the air outlet port 116 of the case 112.

The inlet path guides the air drawn in through the air inlet port 81 to the separation chamber 31a of the separation section 31 through the airtight chamber 23a and the return path 91. The air thus guided to the separation chamber 31a is drawn into the fine-dust duct 25 through the first upstream path including the suction cylinder 33 and the second upstream path including the dust-collecting case 17. At this point, the first outlet port 25a of the fine-dust duct 25 is closed by the second shutter 83. Therefore, the air guided into the fine-dust duct 25 is never drawn into the airtight chamber 23a again.

As described above, the second airflow going through the airtight chamber 23a to which the filter 61 is exposed can carry the dust automatically removed and floating in the airtight chamber 23a to the dust-accumulating section 52 of the dust-collecting case 17. In addition, the second airflow going through the airtight chamber 23a removes the dust from the inner surface of the front wall 22a, which faces the airtight chamber 23a, and also the dust from the front surface of the filter 61, and can carry the dust, thus removed, to the dust-accumulating section 52 of the dust-collecting case 17.

In the present embodiment, the air inlet port 81 is opposed to the center part of the front surface of the filter 61. Further, the second shutter 88 provided at the air inlet port 81 inclines downwards to the filter 61 as shown in FIG. 16 when the air inlet port 81 is opened. Thus, the second shutter 88 guides the air drawn into the airtight chamber 23a through the air inlet port 81, downwards to the center part of the front surface of the filter 61 which is rotating. Hence, the air drawn from the air inlet port 81 is applied downwards to the center part of the front surface of the filter 61.

More specifically, the air drawn from the air inlet port 81 flows in the groove 65b defined by the adjacent pleats 65a immediately after the dust-removing member 95 flicks the pleats 65a of the filter element 65 as the filter 61 rotates. As a result, the dust can be removed from the grooves 65b by utilizing the airflow.

Moreover, the inlet port 91a of the return path 91, into which the air containing the dust removed from the filter 61 flows, is located downstream of the dust-removing member 95, with respect to the direction in which the filter 61 rotates. In other words, the inlet port 91a lies near the lower ends of the grooves 65b of the filter element 65 when air is applied from the air inlet port 81 to the center part of the filter 61. Therefore, the air flowing along the grooves 65b of the filter element 65 is drawn into the inlet port 91a as the filter 61 rotates, without diffusing into the airtight chamber 23a.

While the dust is being automatically removed, the filter 61 continuously rotates through an angle greater than 360°. The front surface of the filter 61 can therefore be cleaned with air in its entirety. Thus, no dust remains on the front surface of the filter 61 or on the inner surface of the front wall 22a of the filter cover part 22, as seen when the filter 61 is removed from the filter cover part 22 of the dust-catching unit 15.

After the vacuum cleaner 1 has been operated in the internal cleaning mode, no dust remains in the airtight chamber 23a to which the filter 61 is exposed. The airtight chamber 23a can therefore be maintained in the initial state, or unused state. This prevents the filter 61 from being clogged in a short time.

While the vacuum cleaner 1 is operating in the internal cleaning mode, the air containing dust and flowing from the airtight chamber 23a into the return path 91 passes through the dust-collecting case 17 before it flows to the fine-dust duct 25. If dust has accumulated in the dust-accumulating section 52, the dust can be used as filtering material. In other words, the accumulated in the section 52 catches the dust returned from the airtight chamber 23a into the dust-collecting case 17. Thus, the air supplied from the airtight chamber 23a and containing dust is cleaned and then flows into the fine-dust duct 25.

The second airflow coming from the separation chamber 31a and reaching the fine-dust duct 25 is drawn into the duct 28 via the second outlet port 25c. Since the second outlet port 25c is covered with the auxiliary filter 27, the auxiliary filter 27 filters out the fine dust particles that have passed through the separation section 31 as the second airflow goes through the auxiliary filter 27. The air drawn into the duct 28 passes through the switching passage 120 of the airflow control device 111 and is drawn from the outlet port 120b into the inlet port 4a of the motor-driven blower 4.

Hence, the second airflow that has passed through the second air passage is drawn into the motor-driven blower 4, without passing through the filter 61, and serves to remove dust from the front surface of the filter 61 and from the airtight chamber 23a. The vacuum cleaner 1 stops operating in the internal cleaning mode, upon lapse of a predetermined time.

In the internal cleaning mode, the notification means 131 operates in accordance with the instructions from the control device 9, informing the user that the cleaner 1 is operating in the internal cleaning mode. The user can therefore know that the vacuum cleaner 1 is operating well.

In the internal cleaning mode, the separation chamber 31a is depressurized, air is drawn from the airtight chamber 23a into the separation chamber 31a via the trough 105 and second dust-collecting hole 40 every time the outlet port 104 is opened as dust is automatically removed from the filter 61 in the internal cleaning mode. Therefore, the dust that the scraping members 102a of the scraping members 102a have scraped can be collected from the outlet port 104 into the separation chamber 31a, by utilizing the airflow.

When the operating mode of the vacuum cleaner 1 is switched from the internal cleaning mode to the ordinary cleaning mode after the internal cleaning is completed, the first shutter 83 and the second shutter 88 are rotated to the open position and the closed position, respectively, in accordance with the instructions from the control device 9. At the same time, the control member 113 of the airflow control device 111 rotates to the first position. The first airflow is thereby generated in the vacuum cleaner 1. At this point, the vacuum cleaner 1 starts the ordinary cleaning.

In the ordinary cleaning mode, the auxiliary filter 27 covering the second outlet port 25c of the fine-dust duct 25 is directly exposed to the first airflow going toward the first outlet port 25a of the fine-dust duct 25. The first airflow can therefore serve to remove the dust the auxiliary filter 27 has caught during the internal cleaning. Therefore, the auxiliary filter 27 need not be cleaned so frequently. This reduces the time for the maintenance of the auxiliary filter 27.

The present invention is not limited to the first embodiment described above. Various changes and modifications can be made, without departing from the scope and spirit of the present invention.

In the first embodiment described above, the second airflow carries dust from the airtight chamber 23a into the separation chamber 31a. Nonetheless, the invention is not limited to this design. Instead, the airtight chamber 23a may be connected to the dust-collecting case 17 by a dedicated passage, and the second airflow containing dust may thereby be guided from the airtight chamber 23a directly into the dust-collecting case 17. Further, dust may be moved from the airtight chamber 23a back into an air passage that connects the separation chamber 31a to the dust-collecting case 17.

In the first embodiment, the communication port 36 connecting the separation chamber 31a and the air inlet duct 24 is opened or closed by the end wall 41 of the cover 34. Nonetheless, this invention is not limited to this design. For example, the cover 34 may not have end wall 41, and the communication port 36 may be opened at all times.

In this case, the negative pressure generated as the motor-driven blower 4 is operated in the air inlet duct 24. Hence, the air drawn via the air inlet duct 24 is drawn into the separation chamber 31a through the communication port 36 and then meets the second airflow in the separation chamber 31a. In other words, the air inlet duct 24 lies upstream of the second airflow, with respect to the separation chamber 31a. Therefore, to keep the communication port 36 open at all times, the airtight chamber 23a and the air inlet duct 24 may be connected by a dedicated passage, thereby to guide the second airflow containing dust from the airtight chamber 23a into the separation chamber 31a through the air inlet duct 24 and the communication port 36.

FIG. 23 shows a second embodiment of the present invention.

The second embodiment differs from the first embodiment in that means for determining how much the filter 61 has been clogged is provided. In any other structural respect, this embodiment is identical to the first embodiment. Therefore, the components identical to those of the first embodiment are designated by the same reference numbers and will not be described.

As shown in FIG. 23, the second embodiment has a current sensor 200, which is used to detect how much the filter 61 has been clogged. The sensor 200 is provided in the drive circuit for driving the motor-driven blower 4. The current sensor 200 detects the value of the current supplied to the motor-driven blower 4. The current value detected by the current sensor 200 is supplied to the filter-controlling unit 201 incorporated in the control device 9.

The filter-controlling unit 201 determines the degree to which the filter 61 has been clogged, from the current value detected by the current sensor 200. Base on the degree of clogging, thus determined, the filter-controlling unit 201 controls the rotational speed of the second motor 71 that serves to remove dust in the internal cleaning mode. That is, the filter-controlling unit 201 decreases the current supplied to the second motor 71 as the degree of clogging increases, thereby to rotate the filter 61 more slowly. Conversely, the filter-controlling unit 201 increases the current supplied to the second motor 71 as the degree of clogging decreases, thereby to rotate the filter 61 faster.

The filter-controlling unit 201 also makes the filter 61 rotate a predetermined number of times in the internal cleaning mode. The polarity of the current supplied to the second motor 71 may be inverted in order to rotate the filter 61 in reverse direction, a number of times equal to or smaller than the predetermined value.

In the second embodiment thus configured, the current sensor 200 detects the value of the current supplied to the motor-driven blower 4 before the vacuum cleaner 1 starts operating in the internal cleaning mode. The filter-controlling unit 201 determines the degree of clogging in the filter 61 from the current value detected by the current sensor 200.

If the degree of clogging exceeds a preset reference value, the filter-controlling unit 201 decreases the current supplied to the second motor 71 so that the filter 61 may rotate more slowly. In this case, the filter 61 rotates slowly because the number of times the filter 61 rotates in the internal cleaning mode. As a result, the air drawn from the air inlet port 81 is applied to the grooves 65b of the filter element 65 for a longer time than otherwise. The filter element 65 can therefore be cleaned more thoroughly, by using the airflow coming from the air inlet port 81. Dust can therefore be reliably removed from the front surface of the filter 61.

If the degree of clogging falls below the preset reference value, the filter-controlling unit 201 increases the current supplied to the second motor 71 so that the filter 61 may rotate faster. In this case, the air drawn from the air inlet port 81 can be applied into each groove 65b of the filter element 65, while the filter 61 is being rotated within a shorter time than usual. Hence, dust can be removed from the front surface of the filter 61 within a short time.

In the second embodiment, the rotational speed of the filter 61 is controlled in accordance with how much the filter 61 has been clogged. Moreover, the dust-removing member 95 never flicks the pleats 65a of the filter element 65 too vigorously. This can suppress the wear of the filter element 65.

The degree of clogging at the filter 61 may fall within a predetermined desirable range. If this is the case, the filter-controlling unit 201 controls the current supplied to the second motor 71 so that the filter 61 may rotate at a reference speed.

In the first embodiment described above, the rotational speed of the second motor 71 is controlled in accordance with the degree of clogging at the filter 61. The control of the second motor 71 is not limited to this method in the present invention. For example, the number of times the second motor 71 is rotated may be controlled in accordance with the degree of clogging, while rotating the second motor 71 at a constant speed.

More precisely, in the internal cleaning mode, the control device 9 controls the second motor 71, causing it to rotate at the constant speed. If the current sensor 200 detects a large current and the filter-controlling unit 201 therefore determines that the degree of clogging at the filter 61 is higher than the upper limit of the preset desirable range, the control device 9 makes the second motor 71 rotate for a longer time, or more times. Conversely, if the current sensor 200 detects a small current and the filter-controlling unit 201 therefore determines that the degree of clogging at the filter 61 is lower than the lower limit of the preset desirable range, the control device 9 makes the second motor 71 rotate for a longer time, or fewer times.

Thus, in the first embodiment, the problem with the clogging at the filter 61 can be solved as in the second embodiment. In addition, the wear of the filter element 65 can be suppressed, because the dust-removing member 95 never flicks the pleats 65a of the filter element 65 too vigorously.

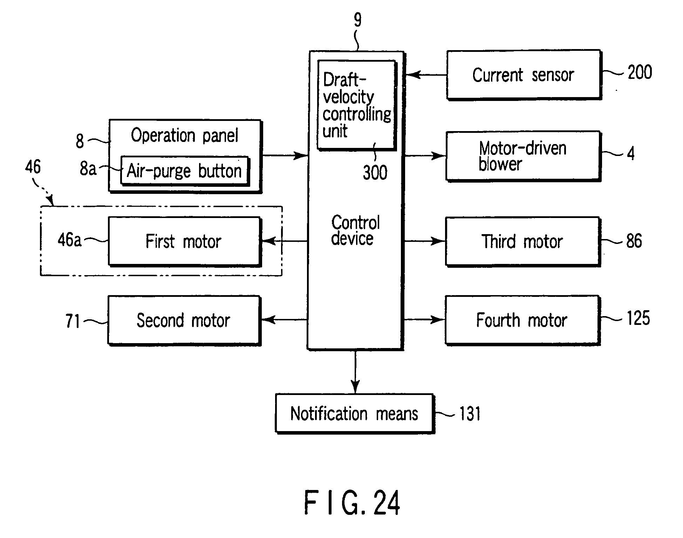

FIG. 24 shows a third embodiment of the present invention.

The third embodiment differs from the second embodiment in that mans for changing the speed of applying air to the filter 61 in the internal cleaning mode is provided. In any other structural respect, the vacuum cleaner 1 according to this embodiment is identical to that of the first embodiment.

As shown in FIG. 24, the control device 9 has a draft-velocity controlling unit 300. The draft-velocity controlling unit 300 controls the motor-driven blower 4 in accordance with the current value detected by the current sensor 200. As mentioned above, the current value detected by the current sensor 200 corresponds to the degree of clogging at the filter 61. The draft-velocity controlling unit 300 controls the motor-driven blower 4 so that the blower 4 may apply more air as the degree of clogging at the filter 61 increases. Hence, air is applied through the air inlet port 81 to the front surface of the filter 61 at a high velocity. Dust can reliably be removed from the grooves 65b of the filter element 65.

The draft-velocity controlling unit 300 controls the motor-driven blower 4 such that, the lower the degree of clogging at the filter 61, the more slowly the motor-driven blower 4 applies air. Air is therefore applied through the air inlet port 81 to the front surface of the filter 61 at a low speed. This reduces the influence the airflow imposes on the grooves 65b of the filter element 65.

Thus, in the third embodiment, the problem with the clogging at the filter 61 can be solved as in the second embodiment. In addition, the deformation of the filter element 65 can be suppressed, because the air drawn through the air inlet port 81 applies no excessive pressure to the filter 61.

## Claims

1. A vacuum cleaner comprising:
a motor-driven blower (4) which draws air;
a dust-catching unit (15) which allows passage of air drawn by the motor-driven blower (4) and which has a separation section (31) configured to separate dust from the air and a dust-collecting section (17) configured to collect the dust separated from the air in the separation section (31);
a receptacle (23) which is arranged between the motor-driven blower (4) and the dust-catching unit (15); and
a filter (61) which is provided in the receptacle (23) and which filters the air that has passed through the dust-catching unit (15),
**characterized in that** an airflow control device (111) is located between the filter (61) and the motor-driven blower (4) and which generates a first airflow that goes toward the motor-driven blower (4) through the dust-catching unit (15) and the filter (61) and a second airflow that goes toward the motor-driven blower (4) after flowing from the receptacle (23), bypasses the filter (61) and passing through at least a part of the dust-catching unit (15), said part of the dust-catching unit (15) being located downstream of the receptacle (23), with respect to a direction in which the second airflow goes.

2. The vacuum cleaner according to claim 1, **characterized by** further comprising a fine-dust duct (25) into which the air is introduced after passing through the dust-collecting section (17); a first shutter (83) which opens and closed an outlet port (25a) for guiding the air from the fine-dust duct to the receptacle (23); a second shutter (88) which opens and closes an air inlet port (81) for introducing air directly into the receptacle (23); and a third shutter (43) which opens and closes a return path (91) for guiding the second airflow from the receptacle (23) to the separation section (31),
wherein when the airflow control device (111) generates the first airflow, the first shutter (83) opens the outlet port (25a), the second shutter (88) closes the air inlet port (81) and the third shutter (43) closes the return path (91), and when the airflow control device (111) generates the second airflow, the first shutter (83) closes the outlet port (25a), the second shutter (88) opens the air inlet port (81) and the third shutter (43) opens the return path (91).

3. The vacuum cleaner according to claim 1, **characterized by** further comprising a duct (28) for guiding the second airflow to the airflow control device (111) after the second airflow has passed through the dust-catching unit (15), and an auxiliary filter (27) for filtering the second airflow going from the dust-catching unit (15) toward the airflow control device (111) through the duct (28).

4. The vacuum cleaner according to claim 3, **characterized in that** the first airflow flowing through the dust-catching unit (15) contacts the auxiliary filter (27) when the airflow control device (111) generates the first airflow.

5. The vacuum cleaner according to claim 3, **characterized in that** the airflow control device (111) comprises a control member (113) having an air hole (119) and a switching passage (120) and a driving unit (114) configured to rotate the control member (113) between a first position and a second position, and the control member (113) guides, while staying in the first position, the first airflow from the air hole (119) to the motor-driven blower (4) after the first airflow has passed through the filter (61), and connects, while staying in the second position, the switching passage (120) to the duct (28), thereby guiding the second airflow from the switching passage (120) to the motor-driven blower (4) after the second air flow has passed through at least a part of the dust-catching unit (15).

6. The vacuum cleaner according to claim 1, **characterized by** further comprising dust-removing means (95) which is configured to remove dust from the filter (61) when the airflow control device (111) generates the second airflow.

7. The vacuum cleaner according to claim 6, **characterized in that** the dust-catching unit (15) comprises a filter cover part (22) having a front wall (22a) facing the filter (61) and having a dust outlet port (104), a shutter (106) configured to open and close the dust outlet port (104), and a dust-discharging member (101) provided between the front wall (22a) and the shutter (106) for guiding the dust removed from the filter (61) to the dust outlet port (104).

8. The vacuum cleaner according to claim 7, **characterized in that** the dust-discharging member (101) rotates together with the filter (61) when dust is removed from the filter (61).

9. The vacuum cleaner according to claim 1, **characterized by** further comprising notification means (131) for notifying that the airflow control device (111) has generated the second airflow.

10. The vacuum cleaner according to claim 1, **characterized in that** the filler (61) is shaped like a disc, has a plurality of grooves (65b) extending in radial direction and is rotated around the axis by a driving unit (71).

11. The vacuum cleaner according to claim 10, **characterized by** further comprising dust-removing means (95) which is configured to flick a plurality of pleats (65a) defining the grooves (65b) of the filter (61), thereby to remove dust from the filter (61), and a return path (91) which is configured to guide the second airflow from the airtight chamber (23a) to the separation section (31), said return path (91) having an inlet port (91a) that opens to the airtight chamber (23a), and said dust-removing means (95) is provided adjacent to the inlet port (91a).

12. The vacuum cleaner according to claim 10, **characterized by** further comprising a sensor (200) which detects a degree of clogging at the filter (61) on the basis of a current supplied to the motor-driven blower (4), and a control device (9) which controls the driving unit (71), and **characterized in that** when the second airflow is generated, the control device (9) controls the driving unit (71) to decrease the rotational speed of the filter (61) as the degree of clogging increases, and to increase the rotational speed of the filter (61) as the degree of clogging decreases.

13. The vacuum cleaner according to claim 10, **characterized by** further comprising a sensor (200) which detects a degree of clogging at the filter (61) on the basis of a current supplied to the motor-driven blower (4), and a control device(9) which controls the driving unit (71), and **characterized in that** when the second airflow is generated, the driving unit (71) rotates the filter (61) at a constant speed, and the control device (9) controls the driving unit (71) to increase a number of times the filter (61) is rotated, as the degree of clogging increases, and to decrease the number of times the filter (61) is rotated, as the degree of clogging decreases.

14. The vacuum cleaner according to claim 10, **characterized by** further comprising a sensor (200) which detects a degree of clogging at the filter (61) on the basis of a current supplied to the motor-driven blower (4), and a control device (9) which controls the motor-driven blower (4), and **characterized in that** the control device (9) controls the motor-driven blower (4) to draw more air as the degree of clogging increases, and less air as the degree of clogging decreases.

15. A method of driving a vacuum cleaner in which dust is separated from air drawn by a motor-driven blower (4) and which has a dust-catching unit (15) for collecting the dust separated from the air, a filter (61) for filtering the air that has passed through the dust-catching unit (15), and a receptacle (23) holding the filter (61), said method **characterized by** comprising:
selecting one of two first and second operating modes, in the first operating mode, the air that has passed the dust-catching unit (15) being guided to the motor-driven blower (4) after filtered by the filter (61), and in the second operating mode, the air directly applied into the receptacle (23) being bypassed the filter (61), passed through the dust-catching unit (15) and guided to the motor-driven blower (4).

16. The method according to claim 15, **characterized in that** in the second operating mode, a degree of clogging at the filter (61) is detected from a current supplied to the motor-driven blower (4), and a rotational speed of the filter (61) is decreased as the degree of clogging increases and is increased as the degree of clogging decreases.

17. The method according to claim 15, **characterized in that** in the second operating mode, the filter (61) is rotated at a constant speed, a degree of clogging at the filter (61) is detected from a current supplied to the motor-driven blower (4), a number of times the filter (61) is rotated is increased as the degree of clogging increases, and is decreased as the degree of clogging decreases.

18. The method according to claim 15, **characterized in that** in the second operating mode, a degree of clogging at the filter (61) is detected from a current supplied to the motor-driven blower (4), and the motor-driven blower (4) is controlled to draw more air as the degree of clogging increases, and to draw less air as the degree of clogging decreases.

## Patentansprüche

1. Staubsauger mit:
einem motorisierten Gebläse (4), das Luft ansaugt;
einer Staubeinfangeinheit (15), die der von dem motorisierten Gebläse (4) angesaugten Luft Durchtritt ermöglicht und die einen Abscheidungsbereich (31), der dazu ausgebildet ist, Staub aus der Luft abzuscheiden, und einen Staubeinfangbereich (17) umfasst, der dazu ausgebildet ist, den aus der Luft abgeschiedenen Staub in dem Abscheidungsbereich (31) zu sammeln;
einer Aufnahme (23), die zwischen dem motorisierten Gebläse (4) und der Staubeinfangeinheit (15) angeordnet ist; und
einem Filter (61), der in der Aufnahme (23) vorgesehen ist und der die durch die Staubeinfangeinheit (15) gelangte Luft filtert,
**dadurch gekennzeichnet, dass** sich eine Luftstromregelungsvorrichtung (111) zwischen dem Filter (61) und dem motorisierten Gebläse (4) befindet und einen ersten Luftstrom erzeugt, der in Richtung des motorisierten Gebläses (4) durch die Staubeinfangeinheit (15) und den Filter (61) strömt, und einen zweiten Luftstrom erzeugt, der in Richtung des motorisierten Gebläses (4) strömt, nachdem dieser aus der Aufnahme (23) strömt, den Filter (61) umgeht und durch wenigstens einen Teil der Staubeinfangeinheit (15) strömt, wobei sich der Teil des Staubeinfangbereichs (15) stromabwärts der Aufnahme (23) bezüglich einer Richtung befindet, in der der zweite Luftstrom strömt.

2. Staubsauger nach Anspruch 1, ferner **gekennzeichnet durch** eine Feinstaubleitung (25), in die die Luft eingeführt wird, nachdem diese **durch** den Staubeinfangbereich (17) gelangt ist; einen ersten Schließer (83), der eine Auslassöffnung (25a) zum Leiten der Luft aus der Feinstaubleitung zu der Aufnahme (23) öffnet und schließt; einen zweiten Schließer (88), der eine Lufteinlassöffnung (81) zum Einführen von Luft direkt in die Aufnahme (23) öffnet und schließt; und einen dritten Schließer (43), der einen Rückleitung (91) zum Leiten des zweiten Luftstroms aus der Aufnahme (23) zu dem Abscheidungsbereich (31) öffnet und schließt,
wobei, wenn die Luftstromregelungsvorrichtung (111) den ersten Luftstrom erzeugt, der erste Schließer (83) die Auslassöffnung (25a) öffnet, der zweite Schließer (88) die Lufteinlassöffnung (81) schließt und der dritte Schließer (43) die Rückleitung (91) schließt, und, wenn die Luftstromregelungsvorrichtung (111) den zweiten Luftstrom erzeugt, der erste Schließer (83) die Auslassöffnung (25a) schließt, der zweite Schließer (88) die Lufteinlassöffnung (81) öffnet und der dritte Schließer (43) die Rückleitung (91) öffnet.

3. Staubsauger nach Anspruch 1, ferner **gekennzeichnet durch** eine Leitung (28) zum Leiten des zweiten Luftstroms aus der Luftstromregelungsvorrichtung(111) nachdem der zweite Luftstrom **durch** die Staubeinfangeinheit (15) geströmt ist, und einen Hilfsfilter (27) zum Filtern des zweiten Luftstroms, der von der Staubeinfangeinheit(15) in Richtung der Luftstromregelungsvorrichtung (111) **durch** die Leitung (28) strömt.

4. Staubsauger nach Anspruch 3, **dadurch gekennzeichnet, dass** der durch die Staubeinfangeinheit (15) strömende erste Luftstrom mit dem Hilfsfilter (27) in Kontakt tritt, wenn die Luftstromregelungsvorrichtung (111) den ersten Luftstrom erzeugt.

5. Staubsauger nach Anspruch 3, **dadurch gekennzeichnet, dass** die Luftstromregelungsvornchtung (111) ein Steuerelement (113), das ein Luftloch (119) und einen Umschaltdurchgang (120) aufweist, und eine Antriebseinheit (114) umfasst, die dazu ausgebildet ist, das Steuerelement (113) zwischen einer ersten Position und einer zweiten Position zu drehen, umfasst, und dass das Steuerelement (113), während es in der ersten Position verbleibt, den ersten Luftstrom von dem Luftloch (119) zu dem motorisierten Gebläse (4) leitet, nachdem der erste Luftstrom durch den Filter (61) geströmt ist, und, während es in der zweiten Position verbleibt, den Umschaltdurchgang (120) mit der Leitung (28) verbindet, wobei **dadurch** der zweite Luftstrom von dem Umschaltdurchgang (120) zu dem motorisierten Gebläse (4) geleitet wird, nachdem der erste Luftstrom durch wenigstens einen Teil der Staubeinfangeinheit (15) geströmt ist.

6. Staubsauger nach Anspruch 1, ferner **gekennzeichnet durch** ein Staubbeseitigungsmittel (95), das dazu ausgebildet ist, Staub von dem Filter (61) zu beseitigen, wenn die Luftstromregelungsvorrichtung (111) den zweiten Luftstrom erzeugt.

7. Staubsauger nach Anspruch 6, **dadurch gekennzeichnet, dass** die Staubeinfangeinheit (15) ein Filterabdeckteil (22), das eine dem Filter (61) gegenüber liegende Vorderwand (22a) und eine Staubauslassöffnung (104) besitzt, einen Schließer (106), der dazu ausgebildet ist, die Staubauslassöffnung (104) zu öffnen und zu schließen, und ein Staubentladungsglied (101) auf weist, das zwischen der Vorderwand (22a) und dem Schließer (106) zum Leiten des von dem Filter (61) beseitigten Staubs zu der Staubauslassöffnung (104) vorgesehen ist.

8. Staubsauger nach Anspruch 7, **dadurch gekennzeichnet, dass** sich das Staubentladungsglied (101) zusammen mit dem Filter (61) dreht, wenn Staub von dem Filter (61) beseitigt wird.

9. Staubsauger nach Anspruch 1, ferner **gekennzeichnet durch** ein Mitteilungsmittel (131) zum Mitteilen, dass die Luftstromregelungsvorrichtung (111) einen zweiten Luftstrom erzeugt hat.

10. Staubsauger nach Anspruch 1, **dadurch gekennzeichnet, dass** der Filter (61) wie eine Scheibe geformt ist, eine Vielzahl von sich in einer radialen Richtung erstreckender Kerben (65b) besitzt und durch eine Antriebseinheit (71) um die Achse gedreht wird.

11. Staubsauger nach Anspruch 10, ferner **gekennzeichnet durch** ein Staubbeseitigungsmittel (95), das dazu ausgebildet ist, eine Vielzahl von die Kerben (65b) des Filters (61) definierenden Falten (65a) anzustoßen, wodurch Staub von dem Filter (61) beseitigt wird, und einer Rückleitung (91), die dazu ausgebildet ist, den zweiten Luftstrom von der luftdichten Kammer (23a) zu dem Abscheidungsbereich (31) zu leiten, wobei die Rückleitung (91) eine Einlassöffnung (91a), die in die luftdichte Kammer (23a) öffnet, aufweist, und wobei das Staubbeseitigungsmittel (95) neben der Einlassöffnung (91a) vorgesehen ist.

12. Staubsauger nach Anspruch 10, ferner **gekennzeichnet durch** einen Sensor (200), der einen Verstopfungsgrad am Filter (61) auf Grundlage einer dem motorisierten Gebläse (4) zugeführten Spannung ermittelt, und einer Steuerungsvorrichtung (9), die die Antriebseinheit (71) steuert und **dadurch gekennzeichnet ist**, dass, wenn der zweite Luftstrom erzeugt wird, die Steuerungsvorrichtung (9) die Antriebseinheit (71) zum Verringern der Drehzahl des Filters (61) steuert, wenn der Verstopfungsgrad ansteigt, und zum Erhöhen der Drehzahl des Filters (61), wenn sich der Verstopfungsgrad verringert.

13. Staubsauger nach Anspruch 10, ferner **gekennzeichnet** mit einem Sensor (200), der einen Verstopfungsgrad des Filters (61) auf der Grundlage einer dem motorgetriebenen Gebläse (4) zugeführten Spannung zu ermitteln, und einer Steuerungsvorrichtung (9), die die Antriebseinheit (71) steuert und **dadurch gekennzeichnet ist, dass**, wenn der zweite Luftstrom erzeugt wird, die Antriebseinheit (71) den Filter (61) mit einer konstanten Geschwindigkeit dreht, und dass die Steuerungsvorrichtung (9) die Antriebseinheit (71) steuert, um die Anzahl von Malen, die der Filter (61) gedreht wird, zu erhöhen, wenn der Verstopfungsgrad ansteigt, und um die Anzahl von Malen, die der Filter (61) gedreht wird, zu verringern, wenn sich der Verstopfungsgrad verringert.

14. Staubsauger nach Anspruch 10, ferner **gekennzeichnet durch** einen Sensor (200), der einen Verstopfungsgrad des Filters (61) auf der Grundlage einer dem motorisierten Gebläse (4) zugeführten Spannung ermittelt, und einer Steuerungsvorrichtung (9), die das motorisierte Gebläse (4) steuert, und **dadurch gekennzeichnet ist**, dass die Steuerungsvorrichtung (9) das motorisierte Gebläse (4) zum Ansaugen von mehr Luft steuert, wenn der Verstopfungsgrad ansteigt, und von weniger Luft, wenn sich der Verstopfungsgrad verringert.

15. Verfahren zum Betreiben eines Staubsaugers, in dem Staub von durch einem motorisierten Gebläses (4) angesaugter Luft abgeschieden wird und der eine Staubeinfangeinheit (15) zum Sammeln des aus der Luft abgeschiedenen Staubs, einen Filter (61) zum Filtern der Luft, die durch die Staubeinfangeinheit (15) geströmt ist, und einer Aufnahme (23), die den Filter festhält (61), aufweist, wobei das Verfahren **gekennzeichnet ist durch**:
Auswählen eines von einem ersten und zweiten Betriebsmodus, wobei in dem ersten Betriebmodus die Luft, die **durch** die Staubeinfangeinheit (15) geströmt ist, zu dem motorisierten Gebläse (4) geleitet wird, nachdem diese von dem Filter (61) gefiltert worden ist, und in dem zweiten Betriebsmodus die direkt in die Aufnahme (23) geleitete Luft, die an dem Filter (61) vorbeiströmt, **durch** die Staubeinfangeinheit (15) gelangt und zu dem motorisierten Gebläse (4) geleitet wird.

16. Verfahren nach Anspruch 15, **dadurch gekennzeichnet, dass** in dem zweiten Betriebsmodus ein Verstopfungsgrad des Filters (61) von einer dem motorisierten Gebläse (4) zugefuhrten Spannung ermittelt wird, und eine Drehzahl des Filters (61) verringert wird, wenn der Verstopfungsgrad ansteigt, und erhöht wird, wenn sich der Verstopfungsgrad verringert.

17. Verfahren nach Anspruch 15, **dadurch gekennzeichnet, dass**, in dem zweiten Betriebsmodus, der Filter (61) mit einer konstanten Geschwindigkeit gedreht wird, ein Verstopfungsgrad des Filters (61) aus einer dem motorisierten Gebläse (4) zugeführten Spannung ermittelt wird, eine Drehanzahl des Filters (61) erhöht wird, wenn der Verstopfungsgrad ansteigt, und verringert wird, wenn sich der Verstopfungsgrad verringert.

18. Verfahren nach Anspruch 15, **dadurch gekennzeichnet, dass**, in dem zweiten Betriebsmodus, ein Verstropfungsgrad des Filters (61) aus einer dem motorisierten Gebläse (4) zugeführten Spannung ermittelt wird, und dass das motorgetriebene Gebläse (4) zum Ansaugen von mehr Luft gesteuert wird, wenn der Verstopfungsgrad ansteigt, und zum Ansaugen von weniger Luft gesteuert wird, wenn sich der Verstopfungsgrad verringert.

## Revendications

1. Aspirateur comprenant :
une soufflerie (4) entraînée par un moteur qui aspire de l'air ;
une caisse à poussière (15) qui permet le passage de l'air aspiré par la soufflerie (4) entraînée par un moteur et qui présente une section séparatrice (31) configurée pour séparer la poussière de l'air et une section collectrice de poussière (17) configurée pour recueillir la poussière séparée de l'air dans la section séparatrice (31) ;
un réceptacle (23) qui est aménagé entre la soufflerie (4) entraînée par un moteur et la caisse à poussière (15) ; et
un filtre (61) qui est aménagé dans le réceptacle (23) et qui filtre l'air qui est passé à travers la caisse à poussière (15),
**caractérisé en ce qu'**un dispositif de commande de flux d'air (111) est disposé entre le filtre (61) et la soufflerie (4) entraînée par un moteur et génère un premier flux d'air qui se dirige vers la soufflerie (4) entraînée par un moteur à travers la caisse à poussière (15) et le filtre (61), et un second flux d'air qui se dirige vers la soufflerie (4) entraînée par un moteur après s'être écoulé hors du réceptacle (23), avoir contourné le filtre (61) et être passé à travers au moins une partie de la caisse à poussière (15), ladite partie de la caisse à poussière (15) étant située en aval du réceptacle (23), par rapport à une direction dans laquelle se dirige le second flux d'air.

2. Aspirateur selon la revendication 1, **caractérisé en ce qu'**il comprend en outre un conduit de poussière fine (25), dans lequel est introduit l'air après être passé à travers la section collectrice de poussière (17) ; un premier obturateur (83), qui ouvre et ferme un orifice de sortie (25a) pour guider l'air du conduit de poussière fine au réceptacle (23) ; un deuxième obturateur (88), qui ouvre et ferme un orifice d'entrée d'air (81) pour introduire de l'air directement dans le réceptacle (23) ; et un troisième obturateur (43), qui ouvre et ferme une voie de retour (91) pour guider le second flux d'air du réceptacle (23) à la section séparatrice (31),
dans lequel le dispositif de commande de flux d'air (111) génère le premier flux d'air, le premier obturateur (83) ouvre l'orifice de sortie (25a), le deuxième obturateur (88) ferme l'orifice d'entrée d'air (81) et le troisième obturateur (43) ferme la voie de retour (91) et, lorsque le dispositif de commande de flux d'air (111) génère le second flux d'air, le premier obturateur (83) ferme l'orifice de sortie (25a), le second obturateur (88) ouvre l'orifice d'entrée d'air (81) et le troisième obturateur (43) ouvre la voie de retour (91).

3. Aspirateur selon la revendication 1, **caractérisé en ce qu'**il comprend encore un conduit (28) pour guider le second flux d'air vers le dispositif de commande de flux d'air (111) après que le second flux a traversé la caisse à poussière (15), et un filtre auxiliaire (27) destiné à filtrer le second flux d'air allant de la caisse à poussière (15) vers le dispositif de commande de flux d'air (111) à travers le conduit (28).

4. Aspirateur selon la revendication 3, **caractérisé en ce que** le premier flux d'air s'écoulant à travers la caisse à poussière (15) vient en contact avec le filtre auxiliaire (27) lorsque le dispositif de commande de flux d'air (111) génère le premier flux d'air.

5. Aspirateur selon la revendication 3, **caractérisé en ce que** le dispositif de commande de flux d'air (111) comprend un élément de commande (113) présentant un trou d'air (119) et un passage de manoeuvre (120) et une unité d'entraînement (114) configurée pour faire tourner l'élément de commande (113) entre une première position et une seconde position, et l'élément de commande (113) guide, tout en restant dans la première position, le premier flux d'air du trou d'air (119) à la soufflerie (4) entraînée par un moteur après que le premier flux d'air a traversé le filtre (61), et raccorde, tout en restant dans la seconde position, le passage de manoeuvre (120) au conduit (28) , guidant de la sorte le second flux d'air du passage de manoeuvre (120) à la soufflerie (4) entraînée par un moteur après que le second flux d'air a traversé au moins une partie de la caisse à poussière (15).

6. Aspirateur selon la revendication 1, **caractérisé en ce qu'**il comprend en outre un moyen (95) d'élimination de la poussière qui est configuré pour éliminer la poussière du filtre (61) lorsque le dispositif de commande de flux d'air (111) génère le second flux d'air.

7. Aspirateur selon la revendication 6, **caractérisé en ce que** la caisse à poussière (15) comprend une partie de couvercle de filtre (22) présentant une paroi frontale (22a) faisant face au filtre (61) et ayant un orifice de sortie de poussière (104), un obturateur (106) configuré pour ouvrir et fermer l'orifice de sortie de poussière (104), et un élément de décharge de poussière (101) aménagé entre la paroi frontale (22a) et l'obturateur (106) pour guider la poussière éliminée du filtre (61) à l'orifice de sortie de poussière (104).

8. Aspirateur selon la revendication 7, **caractérisé en ce que** l'élément de décharge de poussière (101) tourne conjointement avec le filtre (61) lorsque de la poussière est éliminée du filtre (61).

9. Aspirateur selon la revendication 1, **caractérisé en ce qu'**il comprend en outre un moyen de notification (131) permettant de notifier que le dispositif de commande de flux d'air (111) a généré le second flux d'air.

10. Aspirateur selon la revendication 1, **caractérisé en ce que** le filtre (61) est façonné en disque, présente une pluralité de sillons (65b) s'étendant dans une direction radiale et est entraîné à rotation autour de l'axe via une unité d'entraînement (71).

11. Aspirateur selon la revendication 10, **caractérisé en ce qu'**il comprend en outre un moyen d'élimination de poussière (95) qui est configuré pour heurter une pluralité de plis (65a) définissant les sillons (65b) sur le filtre (61), de manière à chasser la poussière du filtre (61), et une voie de retour (91) qui est configurée pour guider le second flux d'air de la chambre étanche à l'air (23a) à la section séparatrice (31), ladite voie de retour (91) ayant un orifice d'entrée (91a) qui s'ouvre sur la chambre étanche à l'air (23a), et ledit moyen d'élimination de poussière (95) étant aménagé en position adjacente à l'orifice d'entrée (91a).

12. Aspirateur selon la revendication 10, **caractérisé en ce qu'**il comprend en outre un capteur (200) qui détecte un degré d'engorgement au niveau du filtre (61) sur la base d'un courant délivré à la soufflerie (4) entraînée par un moteur, et un dispositif de commande (9) qui commande l'unité d'entraînement (71), et **caractérisé en ce que**, lorsque le second flux d'air est généré, le dispositif de commande (9) commande l'unité d'entraînement (71) de manière à réduire la vitesse de rotation du filtre (61) à mesure que le degré d'engorgement augmente, et à augmenter la vitesse de rotation du filtre (61) à mesure que le degré d'engorgement diminue.

13. Aspirateur selon la revendication 10, **caractérisé en ce qu'**il comprend en outre un capteur (200) qui détecte un degré d'engorgement au niveau du filtre (61) sur la base d'un courant délivré à la soufflerie (4) entraînée par un moteur, et un dispositif de commande (9) qui commande l'unité d'entraînement (71), et **caractérisé en ce que**, lorsque le second flux d'air est généré, l'unité d'entraînement (71) fait tourner le filtre (61) à vitesse constante, et le dispositif de commande (9) commande l'unité d'entraînement (71) de manière à augmenter le nombre de rotations du filtre (61) à mesure que le degré d'engorgement augmente, et à diminuer le nombre de rotations du filtre (61) à mesure que le degré d'engorgement diminue.

14. Aspirateur selon la revendication 10, **caractérisé en ce qu'**il comprend en outre un capteur (200) qui détecte un degré d'engorgement au niveau du filtre (61) sur la base d'un courant délivré à la soufflerie (4) entraînée par un moteur, et un dispositif de commande (9) qui commande la soufflerie (4) entraînée par un moteur, et **caractérisé en ce que** le dispositif de commande (9) commande la soufflerie (4) entraînée par un moteur de manière à aspirer davantage d'air à mesure que le degré d'engorgement augmente, et moins d'air à mesure que le degré d'engorgement diminue.

15. Procédé pour commander un aspirateur, dans lequel la poussière est séparée de l'air aspiré par une soufflerie (4) entraînée par un moteur et qui présente une caisse à poussière (15) pour recueillir la poussière séparée de l'air, un filtre (61) pour filtrer l'air qui a traversé la caisse à poussière (15), et un réceptacle (23) contenant le filtre (61), ledit procédé étant **caractérisé en ce qu'**il comprend :
la sélection d'un de deux premier et second modes de fonctionnement où, dans le premier mode de fonctionnement, l'air qui a traversé la caisse à poussière (15) est guidé vers la soufflerie (4) entraînée par un moteur après avoir été filtré par le filtre (61) et, dans le second mode de fonctionnement, l'air directement appliqué dans le réceptacle (23) contourne le filtre (61), traverse la caisse à poussière (15) et est guidé vers la soufflerie (4) entraînée par un moteur.

16. Procédé selon la revendication 15, **caractérisé en ce que**, dans le second mode de fonctionnement, un degré d'engorgement au niveau du filtre (61) est détecté à partir d'un courant délivré à la soufflerie (4) entraînée par un moteur et la vitesse de rotation du filtre (61) est diminuée à mesure que le degré d'engorgement augmente et est augmentée à mesure que le degré d'engorgement diminue.

17. Procédé selon la revendication 15, **caractérisé en ce que**, dans le second mode de fonctionnement, le filtre (61) est entraîné en rotation à vitesse constante, un degré d'engorgement au niveau du filtre (61) est détecté à partir d'un courant délivré à la soufflerie (4) entraînée par un moteur, le nombre de rotations du filtre (61) est augmenté à mesure que le degré d'engorgement augmente et est diminué à mesure que le degré d'engorgement diminue.

18. Procédé selon la revendication 15, **caractérisé en ce que**, dans le second mode de fonctionnement, un degré d'engorgement au niveau du filtre (61) est détecté à partir d'un courant délivré à la soufflerie (4) entraînée par un moteur, et la soufflerie (4) entraînée par un moteur est commandée pour aspirer davantage d'air à mesure que le degré d'engorgement augmente et pour aspirer moins d'air à mesure que le degré d'engorgement diminue.
